# EUROPÄISCHE PATENTANMELDUNG

(11) **EP 2 192 777 A2**
(43) Veröffentlichungstag der Anmeldung: **02.06.2010**
(21) Anmeldenummer: 09013774.6
(22) Anmeldetag: 03.11.2009
(51) Int. Cl.: H04N 7/18, H04N 7/15

(54) **Verfahren zur Steuerung und Installation eines audio visuellen Kommunikationsgerätes mit einfacher Handhabung, eine besondere Kamerasteuerungseinrichtung und Verwendung für die Unterstützung einer Person**

(30) Priorität: 06.11.2008 DE 102008056158
(71) Anmelder: D'Onorio De Meo, Marco, 65795 Hatterheim (DE)
(72) Erfinder: D'Onorio De Meo, Marco, 65795 Hatterheim (DE)

(57) **Zusammenfassung**

Die technische Aufgabe der Erfindung besteht darin ein audiovisuelles Kommunikationsgerät zu realisieren, das in seiner Handhabung extrem einfach ist, gleichzeitig aber unterschiedlichen Anforderungen an die Bedienbarkeit und den Einsatz anpassbar ist.

Darüber hinaus ist es möglich, das Gerät selbst und verschiedene an das Gerät angeschlossene technische Einrichtungen von einem anderen Teilnehmer aus fernzusteuern und audiovisuelle Kommunikationsverbindungen weiterzuleiten, wobei die Freigabe von fernsteuerbaren Funktionen an andere Teilnehmer individuell eingestellt wird. Auch werden die über das Kommunikationsgerät oder über die angeschlossenen fernsteuerbaren Einrichtungen erbrachten Unterstützungsleistungen eines anderen Teilnehmers protokolliert, so dass eine Abrechnung dieser Leistungen möglich ist. Desgleichen erfolgt die Fernsteuerung einer Kamera intuitiv über Bewegungen des audiovisuellen Kommunikationsgerätes. Das Gerät weist zudem weitere Funktionalitäten auf, so dass sein Einsatz für eine dauerhafte Kommunikationsverbindung, die nicht die ständige Aufmerksamkeit der Teilnehmer voraussetzt, möglich ist. Für die Unterstützung mehrer Personen mit Hilfe des Gerätes sind auch Mehrfachverbindungen und die Fernkonfiguration von Funktionen und der Bedienungseinheit des Gerätes vorhanden.

## Beschreibung

### Gebiet der Technik

Die in dieser Schrift offen gelegte und beanspruchte Erfindung betrifft eine Softwarelösung zur einfachen Handhabung und Steuerung eines audiovisuellen Kommunikationsgerätes mit flexibler Konfigurationsmöglichkeit und eine elektromechanische Einrichtung zur Steuerung der Position des Gerätes durch Bewegung eines zweiten Gerätes.

### Bisheriger Stand der Technik

### 1. Übertragungstechnik

Die Information- und Kommunikationstechnik beinhaltet die Übermittlung von Informationen über kleine und große Entfernungen. Dabei werden unterschiedliche kabelgebundene oder drahtlose Techniken eingesetzt. Die übertragenen Informationen werden in Form von analogen oder digitalen Signalen dargestellt. An den Endpunkten der Übertragung erfolgt eine Codierung bzw. Decodierung dieser Signale, so dass die übertragene Information des Senders dem Empfänger zukommt. Die dabei verwendeten Übertragungsprotokolle werden im ISO-Schichtenmodell klassifiziert. Grosse Bedeutung hat dabei das Internet Protokoll (IP) erlangt, aber auch viele anderen aktuell im Einsatz befindliche und zukünftige Standards entsprechen dem ISO-Schichtenmodell Spezielle Anwendungsbeispiele für große Entfernungen sind Festnetze, Breitbandnetzwerke, Mobilfunknetzwerke, Satellitenübertragung, Kabelfernsehen, terrestrisches Fernsehen und Radio, Amateurfunk, für kurze Entfernungen alle Arten von Kabelverbindungen, Infrarotfernbedienungen, Bluetooth, DECT, Wireless USB, WLAN, Funksteuerungen, Lichtleiter, Lichtschranken, etc. Teilweise werden für diese Techniken Vermittlungsstellen oder Server benötigt, andere Systeme (z.B. P2P oder lokale Systeme) kommen weitgehend ohne diese aus.
Aufgrund der allgemeinen Standardisierung und Vernetzung der verschiedenen Übertragungstechniken ist es möglich praktisch jedes Gerät mit einem anderen Gerät für eine Informationsübermittlung zu verbinden. Grenzen werden hierbei im Wesentlichen durch die verfügbare Bandbreite gesetzt. Voraussetzung ist lediglich eine passende Schnittstelle oder ein Adapter für die gewünschte Übertragungstechnik, die in großer Anzahl und Vielfalt im Handel bereitstehen. Beispiele von Geräten, die diese Übertragungstechnik nuten, wie z.B. Handys, gehören mittlerweile zum Alltag. Diese Technik wird aber auch für viele andere Spezialzwecke, z.B. einem ferngesteuerten Timer (EP 1 533 669 A1) eingesetzt.

### 2. Endgeräte und Komponenten

Endgeräte für die audiovisuelle Kommunikation werden durch das Vorhandensein der folgenden Komponenten charakterisiert: Mikrofon, Lautsprecher, Camera und Bildschirm (auch Touchscreen) und Steuereinheiten mit Netzanschluss. Diese Komponenten können als separate Geräte oder in einem Gerät integriert sein. In jedem Falle müssen diese Komponenten über elektronische Schaltungen verfügen, oder mit diesen Verbunden sein, die eine Umwandlung des Audio und Videosignals in ein für die Fernübertragung geeignetes Protokoll durchführen.
Beispiele hierfür sind mit einem PC verbundene oder in diesen integrierte Komponenten, der über Schnittstellenkarten und Treiber, so das die Komponenten und das verwendete Übernagungsnetzwerk (z.B. Internet über einen Router) angesteuert werden, sowie über eine Kommunikationssoftware für die Signalsteuerung und den Verbindungsaufbau verfügt.
Im einfachen Falle einer Türsprech- oder Überwachungsanlage sind Kamera und Bildschirm bzw. Mikrofon und Lautsprecher über Kabel direkt verbunden. Die auf dem Markt befindlichen Ultra Mobile PCs oder UMTS Handys beinhalten zum Teil alle Komponenten in einem Gerät.

### 3. Bedienungselemente und Eingabegeräte

Eingabegeräte im Allgemeinen sind technische Einrichtungen oder Geräte, die aufgrund eines physikalischen Effektes mittelbar oder unmittelbar ein Signal erzeugen, dass elektronisch weiterverarbeitet und übertragen werden kann. Beispiele sind Schalter, Taster, Messgeräte, Lichtschranken, Touchscreens, Touchpads, Computermaus, Joy-Sticks, Mikrofone, Kameras, Bewegungssensoren, Ortssensoren, optische Sensoren, haptische Eingabegeräte, etc. Zu betrachten sind hier insbesondere auch solche Eingabegeräte, die auf eine menschliche Einwirkung, z.B. eine Berührung, eine Geste, einen Laut, einen Körperzustand, eine Bewegung oder einen Denkvorgang reagieren. Dabei kann es sein, dass zunächst ein entsprechendes Verfahren zur Auswertung und Interpretation der Einwirkung erforderlich ist. Beispiele hierfür sind Sprach-, Schrift, Gesichts, Gebärden- oder Mustererkennungssysteme, wobei in diesem Fall unterschiedliche Signale erzeugt und aufgrund ihrer Zuordnung zu unterschiedlichen Bedeutungen individuell weiterverarbeitet werden können. In der Regel ist der Einsatz dieser Eingabegeräte zur Verbesserung der Handhabbarkeit aus dem täglichen Leben und Arbeiten bekannt.

### 4. Signalgeber

Signalgeber im Allgemeinen sind technische Einrichtungen oder Geräte, die in der Lage sind einen wahrnehmbaren Effekt hervorzurufen, der die Aufmerksamkeit einer Person auch bei Ablenkung verursacht. Dieser Effekt kann sichtbar, hörbar, riechbar, schmeckbar oder spürbar sein.
Beispiele sind Klingeln, Lautsprecher, Duftspender, Lampen, Motoren, Vibrationsalarme, Heizelemente, Kühlsysteme, Ventilatoren, Rolladensteuerungen, Pressen, Seilzüge, etc.
Auch komplexe Systeme, die einen spürbaren physikalischen Effekt, wie Zug, Druck oder Erschütterungen, einen spürbaren chemischen oder elektrischen Effekt, wie stoffliche Veränderungen, ein elektrostatisches Feld oder einen Strom erzeugen. Wichtig ist, dass der Effekt schnell wahrnehmbar und eindeutig zuzuordnen ist.

### 5. Bedien- und Überwachungseinheiten

Im Allgemeinen sind mit Bedien- und Überwachungselemente alle technischen Einrichtungen gemeint, die zur Feststellung, Überwachung, Steuerung oder Manipulation von Betriebszuständen, mechanischen, haptischen, optischen, akustischen oder sonstigen Eigenschaften sowie Wirkungen, Bewegungen oder dergleichen von technischen Einrichtungen dienen.

Bedienelemente der Bedieneinheiten sind in der Regel Schalter, Taster, können im Allgemeinen aber beliebige Eingabegeräte wie unter 3 beschrieben sein. In Zusammenhang mit Bildschirmen werden häufig Menüstrukturen eingesetzt, für die auch eine flexible Anpassung oder Personalisierung bereits beschrieben ist (EP 1 433 668 A1, DE 697 27 645 T2 und darin genannte Quellen).

Überwachungselemente der Überwachungseinheiten sind in der Regel Anzeigen, Lampen, Bildschirme oder sonstige wie unter 4. beschriebene Signalgeber, mit dem Unterschied, dass Sie nicht primär Aufmerksamkeit erregen, sondern einen Zustand oder eine Wirkung des überwachten Gerätes darstellen. Oft beinhalten Überwachungseinheiten auch eine Aufzeichnung der dargestellten Zustände.

### 6. Steuereinheiten

Steuereinheiten im Allgemeinen sind technische Systeme, die dediziert oder aufgrund einer Programmsteuerung die Signale verschiedener Geräte verarbeiten und diese steuern. Darunter fallen auch der Aufbau und die Aufrechterhaltung einer Verbindung zu einem anderen Gerät mittels einer der o.g. Übertragungstechniken und die Steuerung der Datenübertragung. Hierzu ist in der Regel ein Netzanschluss verfügbar. Oft sind die Steuereinheiten auch mit einem Prozessor und einem Speicher für Daten und Programme versehen. Im Zusammenspiel mit den Bedienungs- und Überwachungseinheiten verschiedener miteinander verbundener Geräte sind Funktionalitäten wie Fernsteuerung mit Berechtigungsprüfung und Authentifizierungsmechanismen bereits beschrieben (DE 10042 969 C2 und US 2003/0093430 A1). In diesem Zusammenhang ist der Einsatz von Berechtigungskonzepten auf Basis von definierten Rollen gelebter Standard.

### 7. Audiovisuelle Kommunikationsgeräte

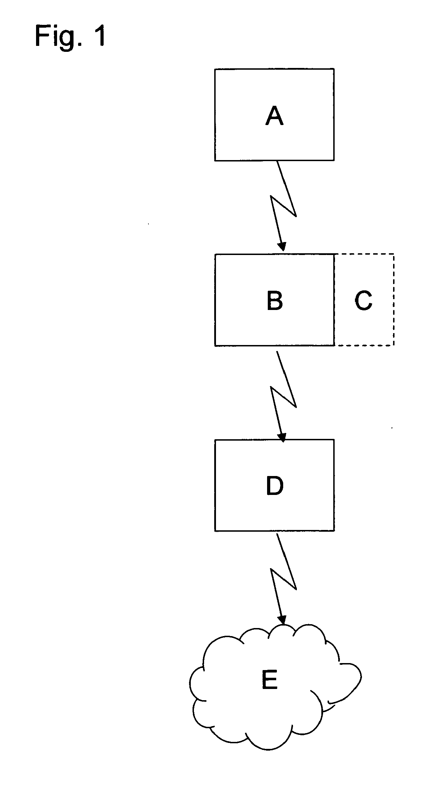

Ein audiovisuelles Kommunikationsgerät besteht aus einer Anordnung gemäß Fig. 1 von Komponenten bestehend aus Peripheriegeräten (A), Steuereinheiten (B), Prozessor und Speicher (C), Netzanschlüssen (D) mit Verbindung zu beliebigen Kommunikationsnetzwerken (E), wobei
1. es sich bei den Peripheriegeräten (A) handelt um
   a. mindestens ein Bild-Wiedergabegerät (z.B. Bildschirm),
   b. mindestens ein Ton-Wiedergabegerät (z.B. Lautsprecher),
   c. mindestens ein Bild-Aufnahmegerät (z.B. Kamera),
   d. mindestens ein Ton-Aufnahmegerät (z.B. Mikrofon),
   e. mindestens einer Bedieneinheit (z.B. Tasten),
2. jedes Peripheriegerät (A) mit mindestens einer Steuereinheit (B) verbunden ist,
3. mindestens eine Steuereinheit (B) über einen Prozessor und Speicher (C) verfügt,
4. bei mehreren Steuereinheiten (B), jede Gruppe von untereinander verbundenen Steuereinheiten (B) über mindestens einen Netzanschluss (D) mit Verbindung zu einem beliebigen Kommunikationsnetzwerk (E) verfügt,
5. drahtgebundene, optische oder drahtlose Verbindungen bestehen zwischen
   a. den Peripheriegeräten (A) mit den Steuereinheiten (B)
   b. den Netzanschlüssen (D) mit den Steuereinheiten (B) und den beliebigen Kommunikationsnetzwerken (E)
   c. zwischen den Steuereinheiten (B)

Dabei ist es unerheblich ob die Komponenten getrennt oder in einem Gerät verbaut sind, wie z.B. bei einem Tablett PC oder einem Mobiltelefon. Ebenso ist es ohne weiteres möglich diese Standardkonfiguration um etwaige weitere, ggf. multimediale Komponenten (A) zu erweitern, sofern die Ressourcenkapazität aller Komponenten für ihr Zusammenwirken adäquat dimensioniert ist. Gängige Geräte sind auch PDAs, UMPCs, Netbooks, Notebooks, Laptops, Desktops und Standalone oder Großgeräte, die mehr oder weniger viele der genannten Komponenten in sich vereinen. Zugrunde gelegt werden dabei unterschiedliche Prozessorplattformen je nach Hersteller und nach erforderlicher Ressourcenkapazität.
Bei Verfügbarkeit eines Datenspeichers können in der Regel die Audio-, Video- oder sonstige Daten auch aufgezeichnet, gespeichert, verwaltet, bearbeitet, manipuliert und weitergeleitet werden.

In der Regel sind in dem Speicher ein Computersystem zur Steuerung aller Komponenten des audiovisuellen Kommunikationsgerätes und eine Kommunikationsanwendung abgelegt. Der Prozessor arbeitet die von dem Computersystem vorgegebenen Prozessschritte ab und übergibt die Steuerung der Bedieneinheit der Peripheriegeräte und des Netzzugangs an das Kommunikationssystem, das wiederum die Funktionen aller dieser Komponenten so synchronisiert, dass alle Funktionen des Gerätes für den Aufbau und die Nutzung einer Kommunikationsverbindung zur Verfügung stehen.

Beispiele sind:
- Softphones in Verbindung mit einem netzwerkfähigen Computer und einem Betriebssystem
- Instant Messenger mit Videokommunikation in Verbindung mit einem Computer und einem Betriebssystem
- Videotelefone
- Set-Top Boxen für Videotelefonie
- Videokonferenzanlagen (Raumsysteme)
- Kiosksysteme mit Videotelefoniefunktion
- Mobile Videotelefone

### 8. Audiovisuelle Kommunikationssysteme

Besagte Kommunikationssysteme bestehen aus einer Anordnung von mehreren über ein oder mehrere beliebige Kommunikationsnetzwerke oder direkt untereinander verbundenen audiovisuellen Kommunikationsgeräten, die über mindestens zwei räumlich getrennte Orte verteilt sind.

Beispiele sind durch beliebige Anordnungen von über ein Kommunikationsnetzwerk verbundene, gemäß 7. beschriebene Geräte, sofern sie über ein kompatibles Kommunikationsprotokoll miteinander kommunizieren.

Nicht zu den gemäß dieser Schrift dargestellten audiovisuellen Kommunikationssystemen zählen z.B. die folgenden Systeme, da sie hauptsächlich zur (Fern-) Beobachtung ausgerichtet sind und demgemäß nur über einen Videokanal in eine Richtung verfügen:
- Videoüberwachungsanlagen,
- Baby-Phones mit Bildübertragung,
- Tür(video-)Sprechanlagen (siehe z.B. Patentschriften DE3938339C2 und DE19536912A1),
- Hausautomatisierungssysteme, soweit Sie eine Videoübertragung beinhalten.

### 9. Funktionen audiovisueller Kommunikationsgeräte

Die verschiedenen unter 7. beschriebenen Geräte sind in der Regel mit einer Vielzahl unterschiedlicher Funktionen zur Steuerung des Verbindungsaufbaus, der Kommunikation, des Gerätes und sonstiger Anwendungen ausgestattet, darunter beispielsweise
1. Anwahlfunktionen: Nummernwahl, Zielwahl, Anwahl aus Telefonbuch, Direktwahl, Wahlwiederholung,
2. Annahmefunktionen: Rufannahme, automatische Rufannahme,
3. Basisfunktionen: Lautstärke, Helligkeit, Stummschaltung, Dunkelschaltung, Mikrofon ein/aus, Kamera ein/aus, ggf. Kamerasteuerung (siehe z.B. Patentschrift DE3933228A1)
4. Adressfunktionen: Adressbuch, Telefonbuch
5. Sonderfunktionen: Präsenzinfo, Instant Message, Protokoll,
6. Multimediafunktionen: Musik, Film, Foto,
7. Sonstige Funktionen: GPS, Navigation, Lokale Services, Abonnement, Banking, Office, Kalender, Notizen, Haussteuerung,
8. Systemeinstellungen: Netzwerk, Provider, Betriebsparameter.

Andere Kommunikationssysteme, wie Hausrufsysteme verfügen z.B. über Alarmfunktionen und teilweise über einen automatischen Verbindungsaufbau gemäß einer vorher festgelegten Reihenfolge von Teilnehmern, in einigen Fällen auch über eine Meldefunktion (Totmanneinrichtung), eine audiovisuelle Verbindung ist jedoch nicht vorgesehen.

Ebenso ist mit einigen Kommunikationssystemen die Nutzung eines gleichzeitig verfügbaren Datenkanals, z.B. für die Fernsteuerung von Geräten möglich. Hierzu wird z.B. auf die für Instant Messenger, Soft- oder IP Videophone eingesetzte Technik auf Basis eines SIP Protokolls, einer P2P Technologie oder UMTS-Verbindung zurückgegriffen. Diese Technologien sind ausführlich in der Literatur beschrieben (siehe Wikipedia, aber auch z.B. bzgl. der Fernsteuerung von Kameras US 2003/0093430 A1, DE 100 10 590 A1 und DE 690 05 660 T2). Auch gibt es kommerziell erhältliche Systeme, z.B. intelligente Haussteuerungssysteme hiefür.

### Einschränkungen des aktuellen Stands der Technik

Aufgrund der Vielfalt der von einem audiovisuellen Kommunikationsgerät angebotenen Funktionen ist die Bedienung dieser Geräte in der Regel sehr komplex. Bei Softphones und Instant Messegern die auf einem darunter liegenden Computersystem basieren, kann gleichzeitig auf das genannte Computersystem und alle seine Anwendungen zurückgegriffen werden, so dass es sogar möglich ist, dass die Kommunikationsanwendung aus dem direkten Zugriff des Anwenders verschwindet und der Anwender über zumindest Basiskenntnisse in der Computerbedienung verfügen muss um die Kommunikationsanwendung wieder in den Vordergrund zu bringen. Unter ungünstigen Umständen kann es sogar passieren, dass die Kommunikationsanwendung beendet wird und erst wieder neu gestartet werden muss. Auch können die Systemeinstellungen ungünstig verändert werden, so dass das Kommunikationssystem in seiner Funktion beeinträchtigt wird oder gar nicht mehr funktioniert.

Bei dedizierten Kommunikationsgeräten wie mobilen Videotelefonen, Videokonferenzanlagen und stationären Videotelefonen ist zwar die Problematik des Zugriffs auf das darunter liegende Computersystem nicht oder nicht in dem gleichen Umfang gegeben, dennoch verfügen diese Geräte über eine Vielfalt von Funktionen, die über mehrere Menüs und Sonderfunktionstasten bedient werden können. Es kann also passieren, dass der Benutzer sich in einem Menübaum des Gerätes verliert und erste eine Reihe von Aktionen durchführen muss, bevor er wieder zum Grundmenü zurückkommt.

Einfacher sind dagegen Kiosksysteme und Set Top Boxen zu bedienen, sie verfügen aber, genauso wie die anderen bislang genannten Geräte, zu mindest über eine Nummern- oder Zielwahlfunktion, die die Eingabe von Ziffern und Texten erfordert. Auch werden bei Set-Top Boxen oft noch Multimediaanwendungen, bei Kiosksystemen allgemeine Informationsdienste angeboten, die entsprechende Anforderungen an die Bedienbarkeit stellen.

In der Regel ist es nicht möglich diese Geräte so einzustellen, dass beim Einschalten selbstständig eine Verbindung aufgebaut wird. Auch ist es nicht vorgesehen, die Bedienung so einzuschränken, dass nur Direktwahlmöglichkeiten bestehen oder ein automatischer Verbindungssuchlauf möglich ist. Auch die Weitervermittlung einer audiovisuellen Verbindung an einen anderen Teilnehmer, im Gegensatz zur reinen Sprachtelefonie, ist nicht verfügbar. Generell sind der Konfigurierbarkeit und Anpassbarkeit der Bedienung der Geräte an spezielle Anforderungen des Benutzers enge Grenzen gesetzt oder keine Möglichkeiten gegeben.

Werden diese Geräte für eine dauerhafte audiovisuelle Kommunikationsverbindung verwendet, bei der es z.B. möglich ist, dass sich ein Teilnehmer bei bestehender Verbindung von dem Gerät entfernt, oder dass er sogar die Audioeinstellungen so verändert, dass kein Ton mehr abgegeben wird, so besteht z.B. keine Möglichkeit, bei bestehender Verbindung, den anderen Teilnehmer an das Gerät heran zu rufen, da die vorhandener Rufeinrichtung nur für das Signalisieren eines ankommenden Anrufs und Veranlassung des Teilnehmers zur Rufannahme vorgesehen ist. Kiosksysteme sind z.B. nicht für eine dauerhafte Kommunikationsverbindung vorgesehen, da sie zu meist an öffentlichen Orten als öffentliches Informationssystem oder ggf. als öffentliches Videotelefon eingesetzt werden.

Verfügt ein audiovisuelles Kommunikationssystem über eine Kamerafernsteuerung, mit der von dem einen Teilnehmer die Kameraausrichtung am Ort des anderen Teilnehmers gesteuert werden kann, so sind hierzu zumindest spezielle Eingabegeräte (z.B. ähnlich zu Joy-Stick bei Spielekonsolen) erforderlich. Eine symmetrische Anordnung, dass beide Teilnehmer jeweils die Kamera am Ort des anderen Teilnehmers steuern wurde bislang nicht beschrieben.
Grundsätzlich besteht die Möglichkeit bei Videokommunikationssystemen auch andere Geräte am Ort des anderen Teilnehmers zu steuern. Hierfür sind jedoch Anwendungen erforderlich, die nicht mit dem audiovisuellen Kommunikationssystem integriert sind.

Eine integriertes System, das zudem die Möglichkeit aufweist speziellen Endgeräten oder sogar speziellen Benutzern mehr oder weniger umfangreiche oder speziell auf den Einzelfall abgestimmte Zugriffsrechte auf bestimmte fernsteuerbare Funktionen zu geben und gleichzeitig die Möglichkeit, eine Protokollierungsfunktion des integrierten audiovisuellen Kommunikationsgerätes z.B. für die Aufzeichnung abrechnungsrelevanter Informationen über erbrachte Unterstützungsleistungen des einen Teilnehmers an den anderen zu verwenden, wurde bislang nicht beschrieben.

### Technische Aufgabe und Lösung der technischen Aufgabe

Die technische Aufgabe der Erfindung besteht darin ein audiovisuelles Kommunikationsgerät zu realisieren, das in seiner Handhabung extrem einfach ist, gleichzeitig aber unterschiedlichen Anforderungen an die Bedienbarkeit und den Einsatz anpassbar ist.

Darüber hinaus soll es möglich sein, das Gerät selbst und verschiedene an das Gerät angeschlossene technische Einrichtungen von einem anderen Teilnehmer aus fernzusteuern und audiovisuelle Kommunikationsverbindungen weiterzuleiten, wobei die Freigabe von fernsteuerbaren Funktionen an andere Teilnehmer individuell eingestellt werden kann. Auch sollen die über das Kommunikationsgerät oder über die angeschlossenen fernsteuerbaren Einrichtungen erbrachten Unterstützungsleistungen eines anderen Teilnehmers protokolliert werden, so dass eine Abrechnung dieser Leistungen möglich ist. Desgleichen soll die Fernsteuerung einer Kamera intuitiv über Bewegungen des audiovisuellen Kommunikationsgerätes erfolgen. Das Gerät soll zudem weitere Funktionalitäten aufweisen, so dass sein Einsatz für eine dauerhafte Kommunikationsverbindung, die nicht die ständige Aufmerksamkeit der Teilnehmer voraussetzt, möglich ist. Für die Unterstützung mehrer Personen mit Hilfe des Gerätes sind auch Mehrfachverbindungen und die Fernkonfiguration von Funktionen und der Bedienungseinheit des Gerätes vorgesehen.

Die Lösung der Aufgabe besteht in der Nutzung eines Verfahrens zur Steuerung eines audiovisuellen Kommunikationsgerätes, das über Programmschnittstellen einer Kommunikationsanwendung, des zugrunde liegenden Computersystems und der Bedieneinheit, sowie sonstiger Anwendungen und angeschlossener Peripheriegeräte diese Funktionen bereitstellt.

Dabei wird in einer Ausführungsform der Erfindung ein Konfigurator verwendet, der es ermöglicht für beliebige Funktionen des audiovisuellen Kommunikationsgerätes und der ggf. an diesem angeschlossenen weiteren Geräte, sowie weiterer Anwendungen, im Detail die Bedienungseinheit zu konfigurieren. Dabei werden jeder über eine Programmschnittstelle ansprechbaren Funktion bestimmte Steuerelemente der Bedienungseinheit zur Bedienung und Konfiguration der Funktion zugewiesen. Diese Steuerelemente können zum einen einer Menüstruktur frei zugeordnet werden, zum anderen können verschiedene Menüstrukturen für unterschiedliche Betriebsmodi des Gerätes definiert werden. Dabei kann der Übergang von einem Betriebsmodus zu einem anderen geschützt werden, so dass ein unbeabsichtigtes Verlassen eines Betriebsmodus nicht möglich oder erschwert ist.

Durch eine Trennung von Steuerelementen für die Bedienung und die Konfiguration in unterschiedliche Betriebsmodi, kann die eigentliche Bedienung des Gerätes in einem bestimmten Betriebsmodus auf das absolut notwendige Maß reduziert werden.

Die Fernsteuerung von Funktionen wird durch die Verwendung eines während der Kommunikationsverbindung gleichzeitig bestehenden Datenkanals realisiert. Über diesen Datenkanal erfolgt ein Datenaustausch zwischen zwei miteinander verbundenen Steuerungssystemen. Hierdurch ist es möglich, dass das Steuersystem eines Gerätes auf die Funktionen des anderen Gerätes zugreift.

In einer speziellen Ausführungsform der Erfindung wird auch der Konfigurator des Gerätes über einen solchen Datenkanal ferngesteuert. Damit ist es möglich, ein oder mehrere verbundene Geräte fern zukonfigurieren. Dabei kann ein Steuerlement für die Funktion eines Gerätes auch den Bedieneinheiten anderer Geräte zugeordnet werden, so dass auch die Fernsteuerung flexibel an spezielle Anforderung der Bedienbarkeit und der Verwendung angepasst werden kann. Für den Fall von Mehrfachverbindungen ist die Möglichkeit einer Weitervermittlung von audiovisuellen Kommunikationsverbindungen vorgesehen.

Ebenso ist in einer speziellen Ausführungsform der Erfindung die Freigabe von Funktionen für die Fernsteuerung an eine Authentifizierungs- und Autorisierungsfunktion gekoppelt, so dass die Rechte für den zugriff auf fernsteuerbare Funktionen einzelfallspezifisch an einzelne Personen und den Anforderungen bzgl. der Verwendung des Gerätes angepasst werden können.

Die Fernsteuerung und die Verwendung des Gerätes werden protokolliert, so dass auf Basis des Nutzungsprotokolls auch eine Abrechnung etwaiger über das Kommunikationsgerät von Dritten erbrachten Leistungen möglich ist.

Die intuitive Fernsteuerung einer Kamera wird durch eine spezielle bewegliche Vorrichtung realisiert, die z.B. zwischen den Bildschirm und den Halter des Bildschirms des einen Gerätes montiert wird. An dieser Vorrichtung sind Positionssensoren befestigt, die die Ausrichtung und Position des Bildschirmes erfassen und über eine Steuerungseinheit an das Steuersystem und weiter über den Datenkanal an die Fernsteuerung der Kamera des anderen Teilnehmers weitergeben. Hierzu kann durch einfaches Bewegen des Bildschirms die Kamera des anderen Teilnehmers gesteuert werden. Aufgrund einer Kalibrierung und Synchronisierung der Bewegung der Kamera mit der Bewegung des Bildschirmes, erscheint der auf dem Bildschirm dargestellte Bildschirmausschnitt direkt mit der Bildschirmposition gekoppelt. Dem Benutzer wird der Eindruck vermittelt, als würde er mit dem Bildschirm durch den fernen Raum navigieren. Hierdurch ist eine intuitive Kamerasteuerung gegeben.

Immer häufiger sind Kameras direkt in das Bildschirmgehäuse integriert, so dass in einer speziellen weiteren Ausführungsform der Erfindung, die Vorrichtung gleichermaßen für die Positionserfassung und Positions-(fem)Steuerung eines Bildschirms mit integrierter Kamera verwendet werden kann. Dies wird dadurch realisiert, dass die Vorrichtung durch Stellmotoren ergänzt wird, die von dem Steuerungssystem in Abhängigkeit der Fernsteuerungssignale gesteuert wird. Gleichzeitig bleibt die Vorrichtung aber manuell bewegbar, so dass die Bildschirme beider Geräte sich synchron bewegen, sobald einer der beiden manuell bewegt wird.

Für den Dauerbetrieb einer audiovisuellen Kommunikationsverbindung, bei der sich die Teilnehmer, während der bestehenden Verbindung auch von dem Gerät entfernen können, ist eine Rufzeichenfunktion vorgesehen.

Anders als das Rufzeichen beim Aufbau einer Verbindung kann dieses während einer bestehenden Verbindung ausgelöst werden. Da es auch sein kann, dass ein Teilnehmer seinen Lautsprecher stumm schaltet, kann diese Funktion auch über eine separate Audiokarte und einen separaten Lautsprecher realisiert werden. Wird die zweite Audiokarte auch mit einem Kontrollmikrofon ausgestattet, so kann die Verfügbarkeit der Rufeinrichtung überprüft werden, auch wenn Hauptlautsprecher und Hauptmikrofon ausgeschaltet sind. Hierzu wird ein kurzer möglichst unhörbarer Kontroll-Ton über den Haupt- und den Signallautsprecher gegeben und das Signal am Haupt- und Kontrollmikrofon ausgewertet. Nur wenn der der Kontroll-Ton des Signallautsprechers auch am Kontrollmikrofon nachgewiesen wird ist die Einrichtung betriebsbereit. Falls dies nicht der Fall sein sollte wird ein Warnzeichen gegeben und ggf. auch an den anderen Teilnehmer übermittelt.

Da es im Dauerbetrieb auch möglich ist, dass die Teilnehmer über einen längeren Zeitraum nicht gleichzeitig in der Nähe des Gerätes sind, wird eine Meldefunktion bereitgestellt. Diese Meldefunktion wird in zwei Ausführungsformen bereitgestellt:
1. (passive Variante): wenn ein Teilnehmer am Gerät ist, dann betätigt er das Meldesignal. Der genaue Zeitpunk der Meldung wird dem anderen Teilnehmer angezeigt, so dass dieser erkennen kann wann der erste Teilnehmer das letzte Mal am Gerät war, bzw. das Meldesignal aktiviert hat.
2. (aktive Variante): die Funktion fragt in regelmäßigen Zeitabständen von dem einen Teilnehmer ein Quittierungssignal ab und wird dies versäumt, dann wird eine entsprechende Information an den anderen Teilnehmer gegeben.

Weitere Funktionen mit denen das Gerät in speziellen Ausführungsformen ausgestattet ist, sind ein Verbindungssuchlauf und der automatische Verbindungsaufbau direkt beim Einschalten des Gerätes. Beide Funktionen ermöglichen das Gerät in einer Ausführungsform mit einfachster Bedienung zu realisieren. Im Extremfall wäre überhaupt kein Benutzereingriff für die Bedienung mehr erforderlich, da das Gerät beim Einschalten selbsttätig die Verbindung aufbaut und aufrecht erhält. In einem weiteren Fall könnte die Bedieneinheit ausschließlich den Verbindungssuchlauf beinhalten, so dass nur ein einziges Steuerelement für die Auslösung des Verbindungssuchlaufs vorhanden wäre, und der Benutzer somit nur einen einzigen Tastendruck benötigt um eine Verbindung aufzubauen.

Falls das Steuerungsverfahren auf einem Standard Computersystem aufgesetzt wird, ist es sinnvoll das Computersystem so zu konfigurieren, dass kein Zugriff auf dieses möglich ist. Hierzu wird ein spezielles Installations- und Konfigurationsverfahren beschrieben, welches den Betrieb des Computersystems und aller anderen Anwendungen im Hintergrund, ähnlich einem Kiosksystem vorsieht.

### Zeichnungen

Fig. 1 zeigt eine Standardkonfiguration eines audiovisuellen Kommunikationsgerätes, bestehend aus Peripheriegeräten (A), Steuereinheiten (B), Prozessor und Speicher (C), Netzanschlüssen (D) mit Verbindung zu beliebigen Kommunikationsnetzwerken (E). Peripheriegeräte können dabei z.B. Bild- und Ton-Wiedergabe- und -Aufnahmegeräte, sowie Bedieneinheiten sein.

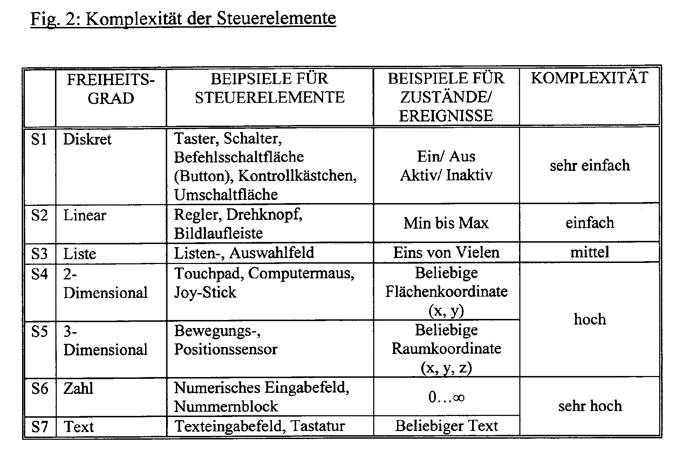

Fig. 2 zeigt eine beispielhafte Aufstellung von Steuerelementen sortiert nach ihren Freiheitsgraden. Weiterhin sind Beispiele für die Zustände der Steuerelemente und eine Klassifizierung der Komplexität angeführt. Steuerelemente, die eine endliche Zahl von Zuständen ("Ein/ Aus" oder "Aktiv/ Inaktiv") einnehmen oder Ereignissen auslösen können, z.B. Taster, Schalter, etc. weisen einen diskreten Freiheitsgrad (S1) auf und werden der Komplexität "sehr einfach" zugeordnet. Elemente mit linearem Freiheitsgrad (S2), wie Regler oder Drehknöpfe werden der Komplexität "einfach" zugeordnet. Listenelemente (S3) werden der Komplexität "mittel", 2- und 3- Dimensionale Steuerelemente (S4, S5) der Komplexität "hoch", und Text- und Numerische Eingabefelder (S6, S7) der Komplexität "sehr hoch" zugeordnet.

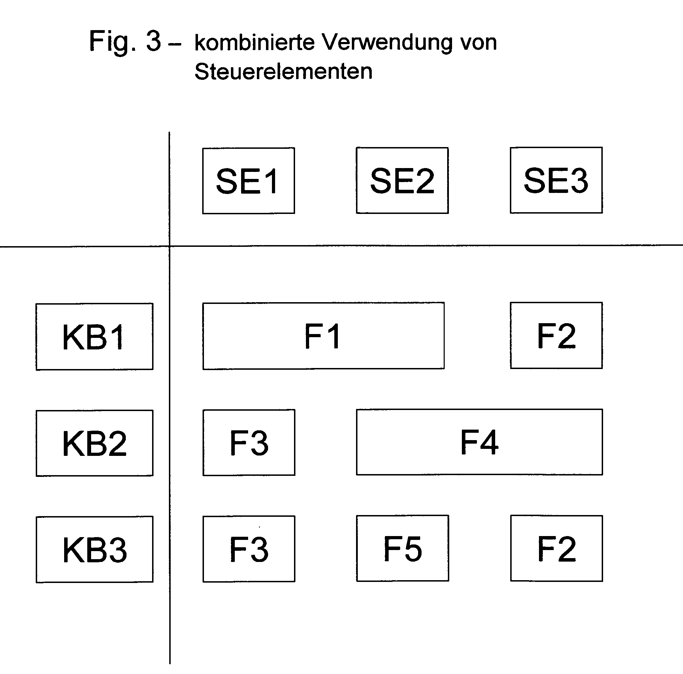

In Fig. 3 sind drei Steuerelemente (SE1, SE2, SE3) mit unterschiedlicher kombinierten Verwendung (KB1, KB2, KB3) dargestellt. Bei separater Verwendung (KB3) sind sie den Funktionen (F2, F3 und F5) zugeordnet. Werden dagegen z.B. die Steuerelemente (SE1 und SE2) in Kombination verwendet (KB1), so sind sie der Funktion (F1) zugeordnet.

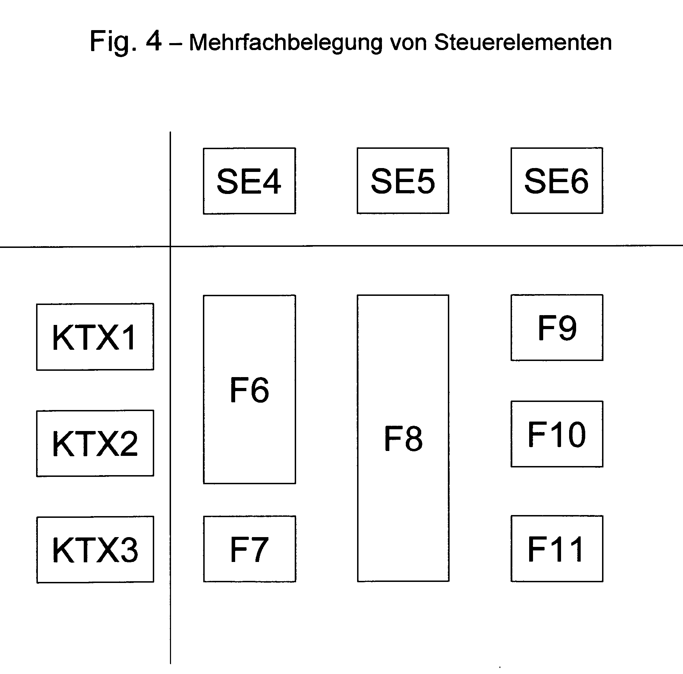

In Fig. 4 ist für 3 Steuerelemente (SE4, SE5, SE6) und 3 verschiedene Kontexte (KTX1, KTX2, KTX3) die jeweils dem Steuerelement zugeordnete Funktion (F6-F11) dargestellt. Beispielsweise ist das Steuerelement (SE4) im Kontext (KTX3) der Funktion (F7) zugeordnet, in den restlichen Fällen der Funktion (F6).

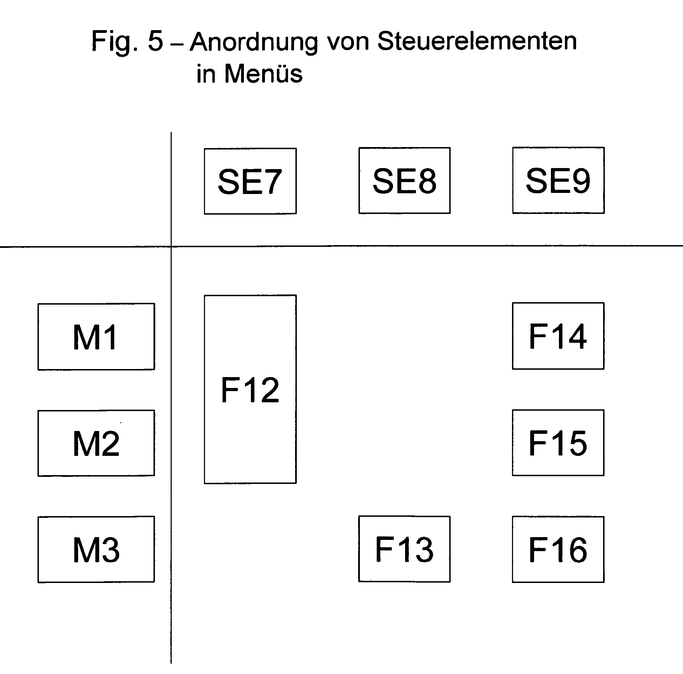

In Fig. 5 ist eine Beispielhafte Zuordnung von Steuerelementen (SE7, SE8, SE9) zu unterschiedlichen Bildern oder Menüs (M1, M2, M3) dargestellt. Dabei ist beispielsweise ein Steuerelement (SE7) nur in den Menüs (M1 und M2) verfügbar und der Funktion (F12) zugeordnet, nicht aber im Menü (M3). Das Steuerelement (SE9) ist dagegen in allen 3 Menüs (M1, M2, M3) verfügbar, ist in jedem Menü aber einer anderen Funktion (F14, F15, F 16) zugeordnet.

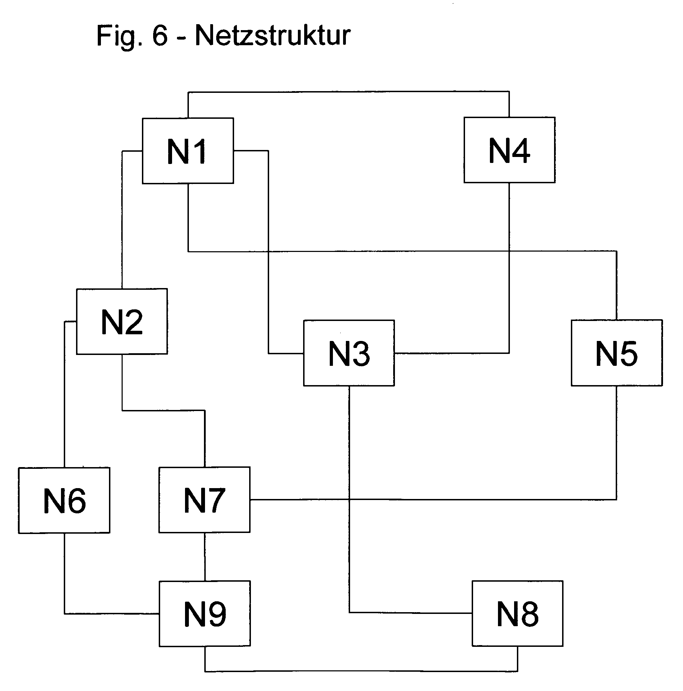

In Fig. 6 ist eine netzartige Menüstruktur von Menüs (N1, ... N9) beispielhaft dargestellt, wobei z.B. Übergänge von einem Menü (N3) zu mehreren Menüs (N1, N4, und N8) möglich sind. Der Übergang von einem Menü (N6) zu einem anderen (N8) kann dabei z.B. über den Pfad (N9) oder (N2-N1-N3) erfolgen.

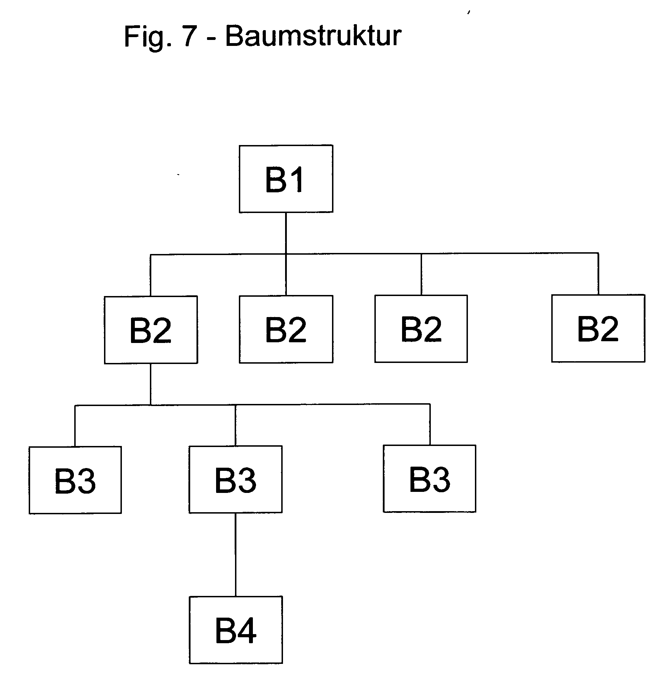

In Fig. 7 ist eine baumartige Menüstruktur beispielhaft dargestellt. Eine Charakterisierung ist durch die (willkürliche) Festlegung des Stammmenüs (hier B1) und der Anzahl der Hierarchieebenen der Menüstruktur gegeben (hier 4).Von dem Menü der ersten Ebene (B1) kann zu 4 verschiedenen Menüs der 2-ten Ebene (B2) gewechselt werden, von einem dieser Menüs wiederum zu 3 verschiedenen Menüs der 3-ten Ebene (B3). Eines dieser Menüs wiederum erlaubt den Wechsel zu einem Menü in der 4-ten Ebene (B4). Gekennzeichnet ist eine Baumstruktur dadurch, dass ein Wechsel von einem Menü zu einem anderen immer nur über einen einzigen Pfad möglich ist.

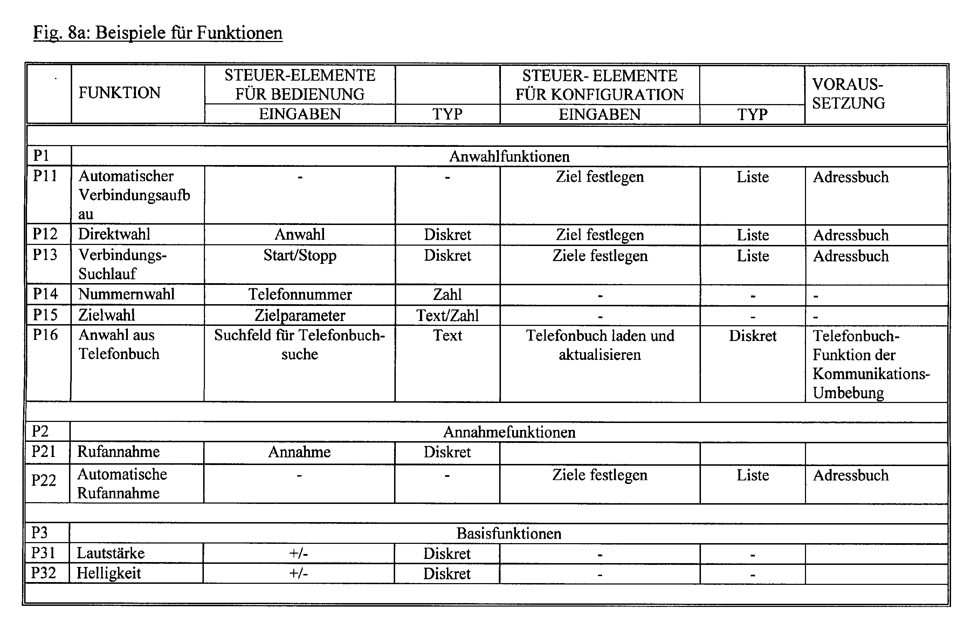

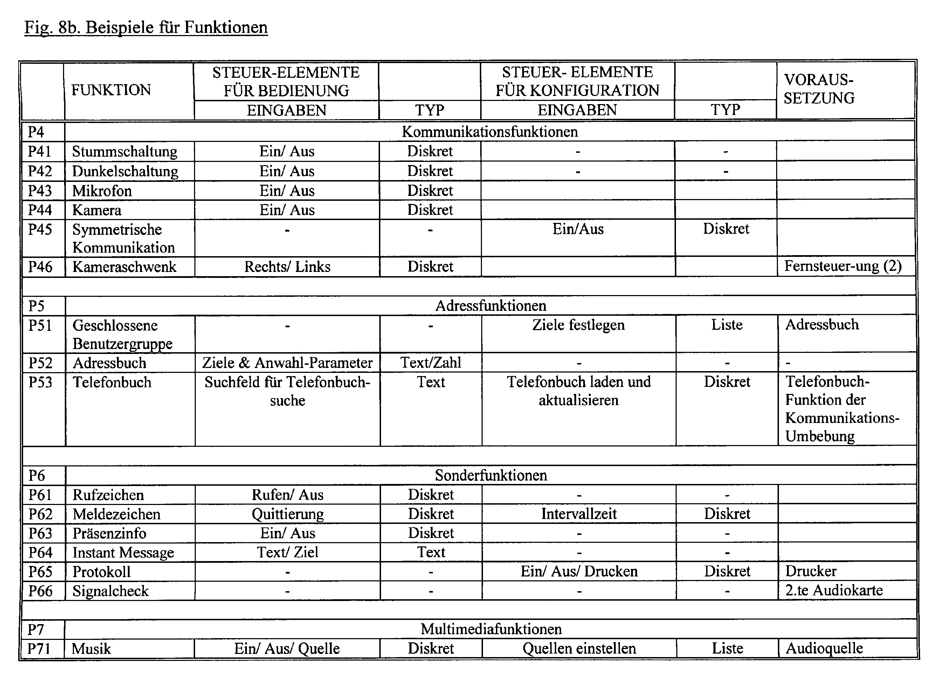

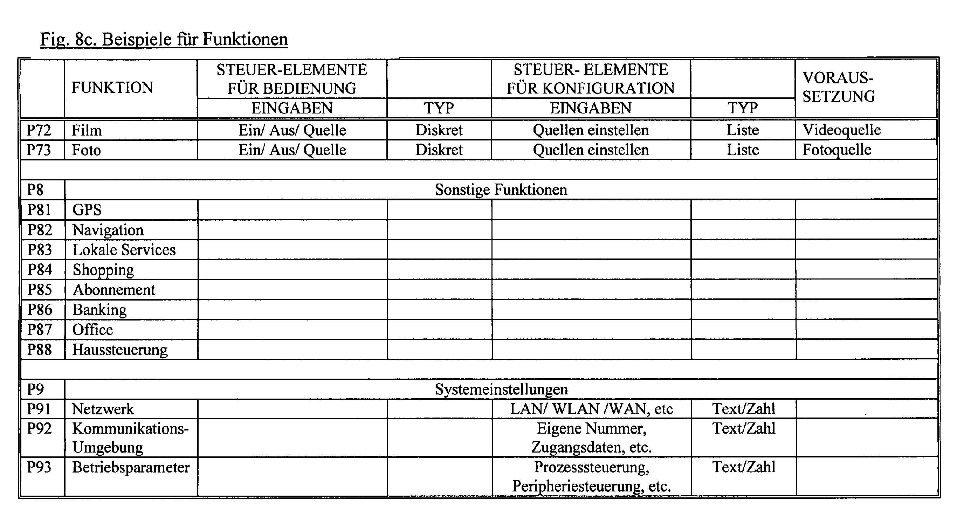

In Fig. 8a., 8b. und 8c. ist eine beispielhafte und vereinfachte Übersicht von Funktionen für audiovisuelle Kommunikationsgeräte und ihrer Steuerelemente gezeigt. Die Steuerelemente sind zusammen mit der Angabe ihrer Freiheitsgrade (Spalte Typ) beispielhaft und willkürlich in die Gruppen "für die Bedienung" und "für die Konfiguration" aufgeteilt.

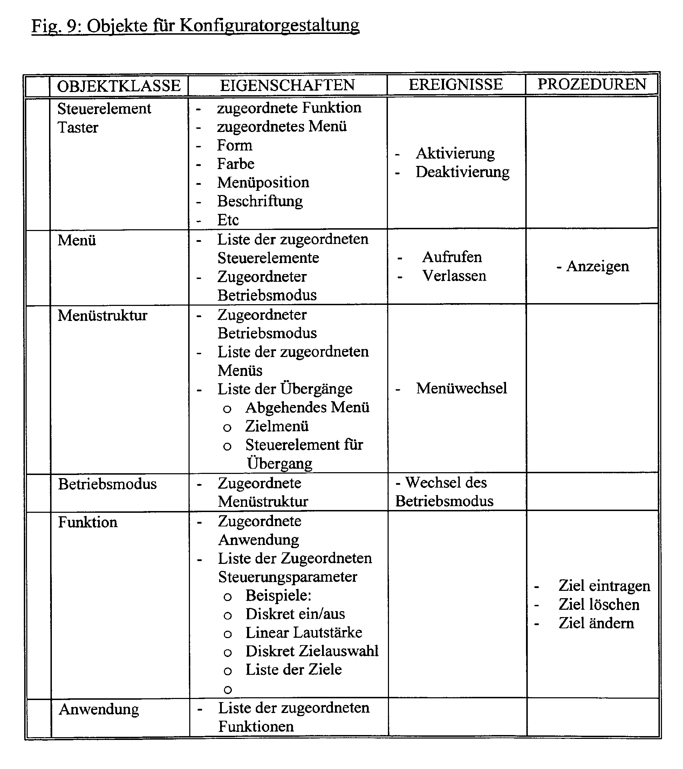

In Fig. 9 ist eine beispielhafte Aufstellung einiger möglicher Objektklassen gezeigt, die zur Realisierung eines Konfigurators für eine Bedieneinheit hilfreich sein könnten. Eine Objektklasse beinhaltet jeweils Eigenschaften, Ereignisse und Prozeduren.

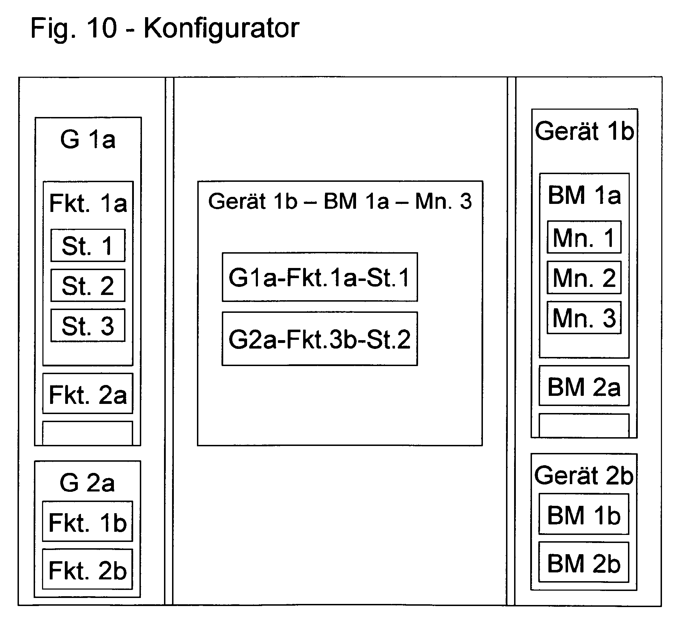

In Fig. 10 ist eine beispielhafte Darstellung der Benutzeroberfläche des Konfigurators aufgezeigt. Auf der linken Seite werden die integrierten Geräte (G1a, G2a) mit ihren Funktionen (Fkt. 1a, Fkt. 2a, Fkt. 1b, Fkt. 2b) und den jeweiligen Steuerelementen (St. 1, St. 2, St.3) aufgeführt. Auf der rechten Seite sind die für die Geräte (G1b, G2b) definierten Betriebsmodi (BM1a, BM2a, BM1b, BM2b) und die dazugehörigen Menüs (Mn.1, Mn.2, Mn. 3) dargestellt. In der Mitte wird ein ausgewähltes Menü (Gerät 1b - BM1a - Mn. 3), das dritte Menü im ersten Betriebsmodus des ersten Gerätes gezeigt, auf das zwei Steuerelemente von zwei Funktionen zweier verschiedener Geräte dargestellt sind, und zwar: das erste Steuerelement der ersten Funktion des ersten Gerätes (G1a-Fkt.1a-St.1) und das zweite Steuerelement der dritten Funktion des zweiten Gerätes (G2a-Fkt.3b-St.2a).

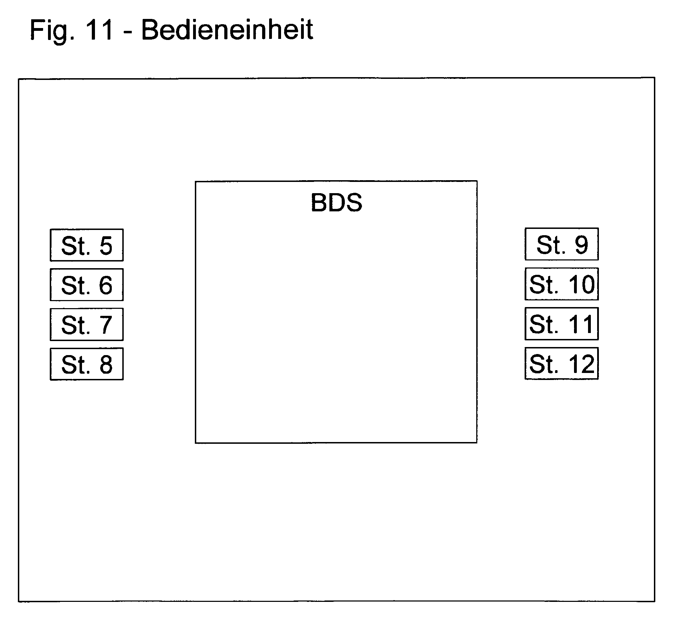

In Fig. 11 ist die Realisierung einer Bedienungseinheit dargestellt mit einem Fenster in der Mitte für die Videoübertragung (BDS), links 4 Steuerelemente (St.5, ..., St. 8), z.B. für die Direktwahl von 3 Zielen und die Rufannahme, rechts 4 weitere Steuerelementen (St. 9,..., St. 12) für die Funktionen Lautstärke (+/-) und Helligkeit (+/-).

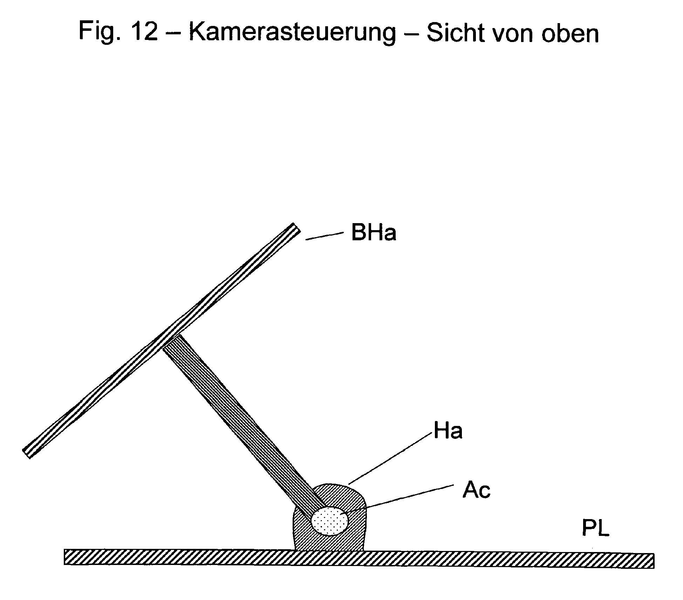

In Fig. 12 ist eine Sicht von oben eines Bildschirmhalters (BHa) gezeigt, der sich um eine Achse (Ac) des Scharniers (Ha) bis zum Anschlag an der Halteplatte (PL) frei bewegen kann.

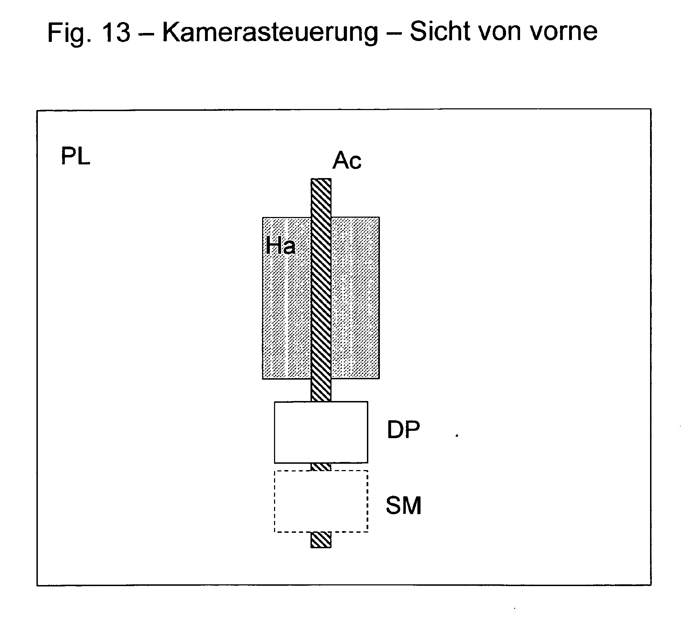

In Fig. 13 ist der gleiche Halter von vorne gezeigt. Die Halteplatte (PL) trägt ein Scharnier (Ha) für die Drehachse (Ac) des Bildschirmhalters. An der Achse (Ac) ist unten ein Drehpotentiometer (DP) als Sensor für die Winkelstellung des Halters angebracht. Optional kann an der gleichen Achse (Ac) auch zusätzlich ein Stellmotor (SM) für die elektromechanische Einstellung der Orientierung montiert sein.

### Beispiele für den Weg zur Ausführung der Erfindung

Die technische Aufgabe der Erfindung besteht unter Anderem darin ein audiovisuelles Kommunikationsgerät zu realisieren, das in seiner Handhabung extrem einfach ist, gleichzeitig aber unterschiedlichen Anforderungen an die Bedienbarkeit und den Einsatz anpassbar ist.

Um die Handhabung des audiovisuellen Kommunikationsgerät objektivierbar zu machen, ist es in einem ersten Schritt hilfreich Kriterien und Kategorien zu definieren, mit denen man ein Maß für die Handhabbarkeit definieren kann.

Um unterschiedlichen Anforderungen an die Bedienbarkeit und den Einsatz flexibel entsprechen zu können ist es in einem zweiten Schritt hilfreich unterschiedliche Betriebsmodi zu betrachten, die sich durch unterschiedlich konfigurierte Bedieneinheiten, auch unterschiedlich verfügbare Funktionalitäten unterscheiden. Durch die flexible Auswahl eines Betriebsmodus, kann die für eine bestimmte Anforderung erforderliche Handhabbarkeit eingestellt werden.

Im Anschluss wird in einem dritten Schritt anhand eines Beispiels gezeigt, wie die Konfiguration einer Bedieneinheit so gestaltet wird, dass die Handhabung des Kommunikationsgerätes extrem einfach wird.

In einem vierten Schritt wird aufgezeigt, wie die Konfiguration einer Bedieneinheit technisch realisiert werden kann, wobei hierfür auch ein Konfigurator verwendet wird. Dabei werden auch besondere Aspekte der Fernbedienung (Berechtigungen, Authentifizierung und Autorisierung, 4-Augen-Prinzip) aufgezeigt.

In einem fünften Schritt wird eine technische Anordnung für eine intuitive Kamerasteuerung dargestellt.

In einem sechsten Schritt werden verschiedene Verfahren für die Installation des Steuerungsverfahrens für die einfache Handhabung dargestellt.

### 1. Handhabbarkeit eines audiovisuellen Kommunikationsgerätes

Die Handhabung eines beliebigen Gerätes erfolgt in der Regel mit einer Bedieneinheit, die über mehrere Bedien- bzw. Steuerelemente verfügt. Dabei werden von der Bedieneinheit und ihrer Steuerelemente durch Benutzeraktionen beeinflussbare unterschiedliche Zustände oder auslösbare unterschiedliche Ereignisse über eine Schnittstelle mit der Steuereinheit von einem Steuerungssystem des Gerätes abgefragt, weiterverarbeitet und zur Veränderung von Zuständen oder Auslösung von Aktionen von Funktionen des Kommunikationsgerätes interpretiert.

Die Benutzeraktion zur Beeinflussung eines Zustandes oder zur Auslösung eines Ereignisses des Steuerelementes, auch User-Event genannt, kann dabei in Computersystemen z.B. über einen Event-Handler erfasst werden und zu einem Prozeduraufruf bei einer Funktion einer Anwendung führen. Eine einfache Benutzeraktionen oder User-Event kann in der Betätigung eines Schalters oder Tasters bestehen, komplexe in der Bewegung einer Computermaus in Verbindung mit einem Mausklick und einer grafischen Benutzeroberfläche.

Die Handhabbarkeit des Gerätes kann als wesentlich, aber nicht nur, durch die Komplexität der Bedieneinheit und ihrer Steuerelemente bedingt betrachtet werden, die wiederum bei abstrakter Betrachtungsweise in folgenden Dimensionen charakterisiert werden kann:
- Komplexität der Steuerelemente,
- Komplexität in Bezug auf die kombinierte Verwendung von Steuerelementen,
- Komplexität in Bezug auf die Mehrfachbelegung von Steuerelementen,
- Komplexität in Bezug auf die Anordnung und Erreichbarkeit von Steuerelementen

Das erfindungsgemäß einfach handhabbare audiovisuelle Kommunikationsgerät kann dadurch realisiert werden, dass die, für eine bestimmte Verwendung des Gerätes mit dem erfindungsgemäßen Verfahren zur Steuerung konfigurierte Bedieneinheit eine niedrige Komplexität aufweist.

Im Folgenden werden die Dimensionen der Komplexität näher spezifiziert.

### A. Komplexität der Steuerelemente

Die für die Steuerung von Funktionen eines beliebigen Gerätes eingesetzten Steuerelemente müssen unterschiedlichsten Anforderungen entsprechen. Entsprechend vielfältig sind deren Erscheinungsformen. Im Handel erhältliche Beispiele reichen von einfachen Schaltern, Tastern, Berührungssensoren, Buttons auf Touchscreens über Drehknöpfe, Schieberegler, Auswahllisten, zweidimensionale Touch-Pads oder -Panels, Computermäuse, Joy-Sticks, dreidimensionale Positions- und Bewegungssensoren bis zu Nummernblöcke für Zahlen und Tastaturen, z.B. für Texteingaben. Aber auch intelligente Sprach-, Schrift-, Gesten-, Bewegungs- oder Mustererkennungssysteme können im weiteren Sinne als Steuerelemente in Bezug auf Ihre Fähigkeit durch Benutzeraktionen beeinflussbare unterschiedliche Zustände oder auslösbare unterschiedliche Ereignisse über eine Schnittstelle an die Steuereinheit übermitteln zu können betrachtet werden.

Eine mögliche Klassifizierung der Steuerelemente nach ihrer Komplexität kann auf Basis der verfügbaren Freiheitsgrade ihrer durch Benutzeraktionen beeinflussbaren unterschiedlichen Zustände oder von ihnen auslösbaren Ereignisse erfolgen. Dabei kann es hilfreich sein eine Regel wie folgt anzuwenden: je mehr Freiheitsgrade ein Steuerelement aufweist, als desto größer wird seine Komplexität betrachtet.

In Fig. 2 sind Beispielhaft einige Steuerelemente nach ihren Freiheitsgraden sortiert und entsprechend dieser Regel einer Komplexität zugeordnet. Steuerelemente, die eine endliche Zahl von Zuständen einnehmen oder Ereignissen auslösen können, z.B. Taster, Schalter, etc. weisen einen diskreten Freiheitsgrad (S1) auf und werden der Komplexität "sehr einfach" zugeordnet. Elemente mit linearem Freiheitsgrad (S2), wie Regler oder Drehknöpfe werden der Komplexität "einfach" zugeordnet. Listenelemente (S3) werden der Komplexität "mittel", 2- und 3- Dimensionale Steuerelemente (S4, S5) der Komplexität "hoch", und Text- und Numerische Eingabefelder (S6, S7) der Komplexität "sehr hoch" zugeordnet.

Ein Touchscreen ist in der Regel als 2-dimensionales Steuerelement zu betrachten. Werden auf dem Bildschirm jedoch z.B. nur diskrete Schaltelemente, z.B. in Form von Buttons angezeigt, so stellt er eine Bedieneinheit mit ausschließlich diskreten Schaltelementen dar, die der Anwender direkt ansprechen kann.
Eine Computermaus in Verbindung mit einer grafischen Benutzeroberfläche ist in der Regel als 2-dimenstionales Steuerelement zu betrachten. Dies gilt auch dann, wenn auf dem Bildschirm nur diskrete Schaltelemente angezeigt werden, da von dem Anwender zunächst über Mausbewegungen die gewünschten (x, y) Koordinaten des Mauszeigers eingestellt werden müssen, bevor durch Mausklick das betreffende Schaltelement aktiviert werden kann.

### B. Komplexität in Bezug auf die kombinierte Verwendung von Steuerelementen,

Beispiele für die kombinierte Verwendung von Bedienelementen sind auf Computertastaturen verwendete Tastenkombinationen, wie <Strg>-C, <Strg>-D, <Strg><Alt><Entf>, etc. Ein weiteres Beispiel ist die kombinierte Verwendung eines 2-dimensionalen Steuerelementes, wie eines Touch-Pads (Fig. 2, S6) in Verbindung mit zwei Tasten (Fig. 2, S1) als Ersatz für eine Computermaus für die Bedienung einer grafischen Benutzeroberfläche.

In Fig. 3 sind drei Steuerelemente (SE1, SE2, SE3) dargestellt, die bei separater Verwendung (KB3) den Funktionen (F2, F3 und F5) zugeordnet sind. Werden dagegen z.B. die Steuerelemente (SE1 und SE2) in Kombination verwendet (KB1), so sind sie der Funktion (F1) zugeordnet.

Eine mögliche Klassifizierung der Komplexität in Bezug auf die kombinierte Verwendung von Steuerelementen kann auf Basis der Anzahl der in der Kombination gleichzeitig verwendeten Steuerelemente erfolgen. Dabei kann es hilfreich sein eine zweite Regel wie folgt anzuwenden: je mehr Steuerelemente gleichzeitig verwendet werden, als desto größer wird die Komplexität betrachtet.

In einer beispielhaften Anwendung dieser Regel kann der Komplexität in Bezug auf die kombinierte Verwendung von Steuerelementen bei nicht vorhandener kombinierter Verwendung von Steuerelementen der Wert "einfach", zugeordnet werden. Bei einer kombinierten Verwendung von 2 Steuerelementen kann der Wert "mittel", bei 3 Steuerelementen der Wert "hoch" und darüber der Wert "sehr hoch" zugeordnet werden.

### C. Komplexität in Bezug auf die Mehrfachbelegung von Steuerelementen

Im einfachsten Falle ist einer Funktion ein dediziertes Bedienelement zugeordnet, dessen durch Benutzeraktionen beeinflussbare unterschiedliche Zustände oder von ihnen auslösbaren Ereignisse direkt die betreffende Funktion steuern. Beispiele sind dedizierte Sonderfunktionstasten z.B. für eine Direktanwahl eines festen Ziels oder dedizierte Regler für Lautstärke oder Helligkeit. Wird ein Steuerelement für verschiedene Funktionen verwendet, z.B. die gleiche Sonderfunktionstaste in einem Kontext für eine Direktwahl eines festen Ziels, in einem anderen für eine Wahlwiederholung, oder der gleiche Regler für Lautstärke oder Helligkeit in Abhängigkeit eines bestimmten Kontextes, liegt eine Mehrfachbelegung vor.
Weitere Beispiele für Mehrfachbelegung sind im Handel in Form von Digitaluhren und Wecker zu finden, bei denen z.B. mit 2 Tasten alle Einstellungen von Uhrzeit und Weckzeit in Stunden und Minuten, sowie Datum mit Jahres-, Monats- und Tagesangabe erfolgen.

Für eine mögliche Klassifizierung der Komplexität in Bezug auf die Mehrfachbelegung von Steuerelementen kann es hilfreich sein zunächst die Abhängigkeit der von einem Steuerelement gesteuerten Funktionen von dem jeweils gültigen Kontext hervorzuheben. Ordnet man alle Steuerelemente und ihre Funktionen den möglichen verschiedenen Kontexten zu, so erhält man eine Zuordnung von Kontext und Bedienelement zur Funktion. Mit anderen Worten: in einem bestimmten Kontext steuern bestimmte Bedienelemente bestimmte Funktionen.

In Fig. 4 ist für 3 Steuerelemente (SE4, SE5, SE6) und 3 verschiedene Kontexte (KTX1, KTX2, KTX3) die jeweils dem Steuerelement zugeordnete Funktion dargestellt. Beispielsweise ist das Steuerelement (SE4) im Kontext (KTX3) der Funktion (F7) zugeordnet, in den restlichen Fällen der Funktion (F6).

Eine mögliche Klassifizierung der Komplexität in Bezug auf die Mehrfachbelegung von Steuerelementen kann auf Basis der maximalen Anzahl von Mehrfachbelegungen der Steuerelemente erfolgen. Dabei kann es hilfreich sein eine dritte Regel wie folgt anzuwenden: je mehr Funktionen einem Steuerelement zugeordnet verwendet werden, als desto größer wird die Komplexität betrachtet.

In einer beispielhaften Anwendung dieser Regel kann der Komplexität in Bezug auf die Mehrfachbelegung von Steuerelementen bei nicht vorhandener Mehrfachbelegung (Einfachbelegung) von Steuerelementen der Wert "einfach". zugeordnet werden. Bei einer Mehrfachbelegung von maximal 2 Funktionen für ein Steuerelementen kann der Wert "mittel", bei maximal 3 Funktionen für ein Steuerelementen der Wert "hoch" und darüber der Wert "sehr hoch" zugeordnet werden.

Unerheblich für diese Betrachtung ist dabei die Art und Weise, wie ein Wechsel von einem Kontext zu einem anderen erfolgt. In der Regel wird dies durch das Steuerungssystem des Gerätes auf Basis bestimmter Zustände und Ereignisse bestimmt. Es sei noch angemerkt, dass die kombinierte Verwendung von Steuerelementen und die Mehrfachbelegung zwar unterschiedliche Fälle darstellen, durch eine einfache logische Zuordnung aber aufeinander abgebildet werden können, in dem man für jede kombinierte Verwendung von Steuerelementen jeweils einen eigenen Kontext definiert. Beispiel hierfür ist die Verwendung von Groß- und Kleinschreibung auf der Tastatur. Durch die kombinierte Verwendung der <Umsch>-Taste mit einer Buchstaben-Taste wird jede Buchstaben Taste mit einer anderen Funktion belegt. Genauso hätte man diesen Fall so interpretieren können, dass die Betätigung der <Umsch>-Taste für die Buchstaben Tasten einen neuen Kontext definiert.

### D. Komplexität in Bezug auf die Anordnung und Erreichbarkeit von Steuerelementen

Ein besonderer Fall von Mehrfachbelegung liegt bei der Verwendung von Steuerelementen in Verbindung mit einer grafischen Benutzeroberfläche vor. In diesem Falle wird der Kontext für die Verwendung der Steuerelemente durch eine Darstellung auf der grafischen Benutzeroberfläche signalisiert. Häufig wird als Steuerelement eine Computermaus verwendet, weit verbreitet sind aber z.B. auch Bedieneinheiten auf Basis von Touch- Panels mit berührungsempfindlichen Zonen und durch einen dahinter liegenden Monitor erzeugten Hintergrundbildern, so dass hierdurch beliebig viele Anordnungen von Steuerelementen, je nach Bedarf flexibel bereitgestellt werden können. Hierzu sind am Markt ganze Bibliotheken von Steuerelementen für die Verwendung im Zusammenhang mit grafischen Benutzeroberflächen erhältlich.

Durch die Verwendung einer grafischen Benutzeroberfläche werden die Möglichkeiten unterschiedliche Kontexte zu verwenden drastisch erweitert. Gerade im Zusammenhang mit Computerspielen werden z.B. bewegte Bilder dargestellt und die Funktion eines Steuerelementes ist abhängig von der auf den Bildern dargestellten Szene und dem genauen Zeitpunkt. Insbesondere ist es z.B. möglich Steuerelemente nur in einem bestimmten Kontext überhaupt nur verfügbar zu machen.

Für eine Klassifizierung der Komplexität in Bezug auf die Anordnung der Steuerelemente kann es hilfreich sein, in einem ersten Schritt die Zuordnung der Steuerelemente zu einzelnen Bildern auf der grafischen Benutzeroberfläche zu betrachten. Handelt es sich nicht um bewegte Bilder, sondern um eine endliche Anzahl von, durch die Steuereinheit des Gerätes bestimmte feststehende Darstellungen, so kann man auch von Masken oder Menüs sprechen.

In Fig. 5 ist eine Beispielhafte Zuordnung von Steuerelementen (SE7, SE8, SE9) zu unterschiedlichen Bildern oder Menüs (M1, M2, M3) dargestellt. Dabei ist beispielsweise ein Steuerelement (SE7) nur in den Menüs (M1 und M2) verfügbar und der Funktion (F12) zugeordnet, nicht aber im Menü (M3). Das Steuerelement (SE9) ist dagegen in allen 3 Menüs (M1, M2, M3) verfügbar, ist in jedem Menü aber einer anderen Funktion (F14, F15, F 16) zugeordnet.

Betrachten man den Wechsel zwischen unterschiedlichen Menüs, so kann hierdurch eine Beziehung zwischen den Menüs hergestellt werden, die so genannte Menüstruktur, die angibt, von welchem Menü zu welchem anderen Menü ein Wechsel möglich ist. Im Falle von bewegten Bildern wäre ein komplexer multidimensionaler Zustandsraum zu betrachten, für eine endliche Anzahl diskreter Menüs, lässt sich die Menüstruktur dagegen als Netzwerk darstellen.

In Fig. 6 ist eine derartige netzartige Menüstruktur von Menüs (N1, ... N9) beispielhaft dargestellt, wobei z.B. Übergänge von einem Menü (N3) zu mehreren Menüs (N1, N4, und N8) möglich sind. Der Übergang von einem Menü (N6) zu einem anderen (N8) kann dabei z.B. über den Pfad (N9) oder (N2-N1-N3) erfolgen. Solche netzartigen Menüstrukturen findet man z.B. häufig in Mobiltelefonen, in denen z.B. das Adressbuch über das Hauptmenü, eine Sonderfunktionstaste auf dem Tastenfeld, aus dem Menü für den Kurznachrichtenversand oder der Anrufliste erreichbar ist.

In Fig. 7 ist der Sonderfall einer baumartigen Menüstruktur beispielhaft dargestellt. Von dem Menü der ersten Ebene (B1) kann zu 4 verschiedenen Menüs der 2-ten Ebene (B2) gewechselt werden, von einem dieser Menüs wiederum zu 3 verschiedenen Menüs der 3-ten Ebene (B3). Eines dieser Menüs wiederum erlaubt den Wechsel zu einem Menü in der 4-ten Ebene (B4). Gekennzeichnet ist eine Baumstruktur dadurch, dass ein Wechsel von einem Menü zu einem anderen immer nur über einen einzigen Pfad möglich ist. Eine Charakterisierung ist durch die (willkürliche) Festlegung des Stammmenüs (hier B1) und der Anzahl der Hierarchieebenen (hier 4) der Menüstruktur gegeben.

Eine mögliche Klassifizierung der Komplexität in Bezug auf die Anordnung und Erreichbarkeit von Steuerelementen kann auf Basis der Topologie der Menüstruktur erfolgen. Dabei kann es hilfreich sein eine vierte Regel wie folgt anzuwenden: je mehr Pfade für die Verbindung zwischen zwei Menüs bestehen, als desto größer wird die Komplexität betrachtet. Bei nur einem Pfad könnte noch die Zahl der Menüebenen berücksichtigt werden.

Eine baumartige Menüstruktur könnte z.B. der Komplexität "einfach" zugeordnet werden, eine netzartige Menüstruktur der Komplexität "mittel" und eine Situation von bewegten Bildern, die durch einen multidimensionalen Zustandsraum darzustellen wäre der Komplexität "hoch" zugeordnet werden. Verfeinerungen dieser Klassifizierungen können z.B. für Menüstrukturen "einfacher" Komplexität durch Angabe der Zahl der Ebenen, bei festgelegtem Stammmenü, oder für Menüstrukturen "mittlerer" Komplexität durch Angabe der maximalen Zahl von unterschiedlichen Pfaden für den Übergang zwischen zwei beliebigen Menüs erfolgen.

### E. Definition der Gesamtkomplexität der Bedieneinheit als Maß für die Handhabbarkeit

Ein Maß für die Gesamtkomplexität einer Bedieneinheit kann durch einen Parametersatz (I, J, K, L) von Werten I, J, K, L dargestellt werden, wobei
1. I für den maximalen Freiheitsgrad der Steuerelemente steht und mit ansteigender Komplexität in dieser Reihenfolge die Werte I=1="diskret", I=2="linear", I=3="Liste", I=4="2-dimensional" und I=5="3-dimensional", I=6="Zahl" und I=7="Text" einnehmen kann,
2. J für die maximale Zahl der in Kombination gleichzeitig verwendeten Steuerelemente steht, wobei J=1, 2, 3, ...,
3. K für die maximale Zahl der einem Steuerelementen zugeordneten Funktionen steht, mit K=0, 1, 2, ... und
4. L für die Komplexität der Menüstruktur der Bedieneinheit steht und mit ansteigender Komplexität in dieser Reihenfolge die Werte L=(1, M)="Baumstruktur mit M Ebenen", L=(2, N)="Netzstruktur mit maximal N Pfaden zwischen zwei Menüs" und L=3="multidimensionaler Zustandsraum" einnehmen kann. M und N kennzeichnen dabei den Rang der Komplexität einer Menüstruktur mit ansteigendem Zahlenwert, mit L=(1, M), M= 1, 2, 3, ...die Zahl der Ebenen für Baumstrukturen (bei festegelegtem Stammenü) und L=(2, N), N= 2, 3, 4, ... die maximale Zahl der Pfade für Netzstrukturen.

Ein Vergleich der Komplexität zweier Bedieneinheiten oder zweier Realisierungen einer Bedieneinheit kann durch Vergleich der jeweiligen Gesamtkomplexitäten (I, J, K, L) und (I', J', K', L') der beiden Einheiten erfolgen. Gilt für alle Werte I<=I', J<=J', K<=K', L<=L' und für mindestens einen der Werte I<I', J<J', K<K' oder L<L', dann kann die Gesamtkomplexität der ungestrichen Bedieneinheit niedriger als die Gesamtkomplexität der gestrichenen Bedieneinheit betrachtet werden. Gilt dagegen I=I', J=J', K=K', L=L' dann können die Gesamtkomplexitäten beider Bedieneinheiten als gleichwertig angesehen werden.

Für den speziellen Fall von baumartigen oder netzartigen Menüstrukturen mit L=(L, x)=L'=(L, x') ist eine erweiterte Betrachtung erforderlich, da (L, x) = (L, x') nur wenn x=x' gilt und (L, x) < (L, x') wenn x<x'.

### 2. Betriebsmodi eines audiovisuellen Kommunikationsgerätes

### A. Definition Betriebsmodus

Aus Computerspielen ist bekannt, dass man nach Erreichen einer bestimmten Punktezahl in einen höheren Level wechseln kann. Viele elektronische Geräte kennen einen Benutzer-Modus und einen Expertenmodus. Allgemein sind verschiedene Betriebsmodi oder Level dadurch gekennzeichnet, dass die jeweils verfügbaren Funktionen sich in Anzahl und Komplexität unterscheiden.

### B. Definition geschützter Betriebsmodus

Ein geschützter Betriebsmodus ist dadurch gekennzeichnet, dass ein unbeabsichtigtes Verlassen desselben nicht möglich oder erschwert ist. Beispielsweise ist es bei öffentlich zugänglichen Informations- oder Kiosksystemen dem Nutzer nicht möglich auf Betriebssystemfunktionen des zu Grunde liegenden Computersystems zuzugreifen. Bei Firmenrechnern sind häufig dem Anwender eines Computersystems keine Administrationsrechte zugewiesen, diese werden erst nach Eingabe eines Administratorkennwortes zugänglich. Bei Mobiltelefonen sind bestimmte Funktionen nur nach Eingabe einer PIN Nummer erreichbar. Ebenso denkbar ist der Schutz eines Betriebsmodus dadurch, dass das Verlassen desselben die Eingabe einer bestimmten Tastenkombination (z.B. <Strg.><Alt><Entf.> oder einer bestimmten Sequenz von Benutzereingaben (z.B. Aufruf eines anderen Betriebsmodus, Bestätigung des Aufrufes, Quittierung einer Sicherheitsabfrage) erfordert. Ebenso ist die Verwendung einer dedizierten Sonderfunktionstaste möglich.

### C. Definition Bedienungs- und Konfigurationsmodus

Ein Betriebsmodus eines Gerätes mit mehreren Anwendungen und Funktionen, in welchem für die Bedienung der der Anwendung mindestens eine wesentliche Funktion verfügbar ist kann als Bedienungsmodus bezeichnet werden. Ein Betriebsmodus eines Gerätes in welchem ausschließlich Konfigurationsfunktionen, verfügbar sind, kann als Konfigurationsmodus bezeichnet werden. Alle anderen Betriebsmodi sind Mischformen.

Generell ist die Kennzeichnung eines Betriebsmodus als Bedienungs- oder Konfigurationsmodus willkürlich, da aufgrund der Möglichkeit zwischen zwei Betriebsmodi zu wechseln, die in den jeweiligen Betriebsmodi verfügbaren Menüstrukturen auch zu einer einzigen, einen neuen zusammengesetzten Betriebsmodus definierende Menüstruktur gehörig betrachtet werden können, wenn man nur die Übergänge zwischen den beiden ursprünglichen Betriebsmodi als Menüübergänge der neuen zusammengesetzten Menüstruktur interpretiert.

Ebenso kann man einen Betriebsmodus in mehrere Betriebsmodi zerlegen, wenn man einzelne Menüübergänge der ursprünglichen Menüstruktur als Betriebsmodus-Übergänge so deklariert, dass zwei separate Menüstrukturen, die den beiden Betriebsmodi der Zerlegung entsprechen, entstehen.

Eine eindeutige Unterscheidung mehrerer Betriebsmodi ist nur möglich, wenn die Übergänge zwischen den Betriebsmodi sich eindeutig von anderen Übergängen zwischen verschiedenen Menüs unterscheiden. Dies ist z.B. dann der Fall, wenn ein Betriebsmodus geschützt ist. Dann ist das unabsichtliche Verlassen des Betriebsmodus nicht möglich oder erschwert. Diese Eigenschaft ist jedoch für Menüübergänge innerhalb des Betriebsmodus nicht gegeben.

Zum Beispiel kann für ein audiovisuelles Kommunikationssystem ein geschützter Betriebsmodus mit einer Anwahl- oder Annahmefunktion für eine Verbindung eindeutig als Bedienungsmodus bezeichnet werden, ein geschützter Betriebsmodus, der weder über eine Anwahl- oder Annahmefunktion verfügt eindeutig als Konfigurationsmodus.

### D. Weitere Betriebsmodi

Weitere bekannte oder denkbare Betriebsmodi mit unterschiedlichen Anforderungen an die Komplexität und Verfügbarkeit von Funktionen könnten z.B. folgende Betriebsmodi sein: Baby, Kind, Spiele, Medien, Büro, Küche, Hobby, Automatik, Fernsteuerung, Einfach, Anfänger, Senior, Spezial, Voll, Privat, Wartungsbetrieb, Servicebetrieb, Setup, Installationsbetrieb und Expertenbetrieb. Welche Funktionen mit welcher Komplexität der Bedieneinheit jeweils bereitgestellt werden, kann in großem Umfang willkürlich durch die Konfiguration der durch das Steuerungsverfahren des audiovisuellen Kommunikationsgerätes gesteuerten Bedienungseinheit festgelegt werden.

### 3. Beispiel einer Konfiguration einer Bedieneinheit eines audiovisuellen Kommunikationssystems

In Fig. 8a., 8b. und 8c. ist eine beispielhafte und vereinfachte Übersicht von Funktionen für Anwendungen eines audiovisuellen Kommunikationsgerätes gegeben. Daneben sind für die meisten Funktionen auch mögliche Ausprägungen ihrer Steuerelemente nebst deren Komplexität beispielhaft dargestellt. Weiterhin werden die Steuerelemente willkürlich in zwei Kategorien für Bedienung und für Konfiguration getrennt, so dass damit ein Betriebsmodus für die Bedienung mit extrem niedriger Komplexität möglich wird.

Die in Fig. 8a., 8b. und 8c. dargestellten Funktionen sind im Einzelnen:

### (P1) Anwahlfunktionen

(P11) Die Funktion "automatischer Verbindungsaufbau" (P11) stellt beim Einschalten des Gerätes automatisch eine Verbindung mit dem fest eingestellten Ziel her, sofern das Ziel erreichbar ist und der Verbindungsaufbau bestätigt wird. Die Konfiguration dieser Funktion besteht darin das Ziel festzulegen, dies kann z.B. durch Auswahl eines Ziels aus einem Adressbuch geschehen. Denkbare Varianten für die Konfiguration sind die direkte Eingabe einer Zielrufnummer oder die Auswahl des Zieles anhand der Suchfunktion einer Telefonbuchfunktion. Auch könnten neben dem ersten Ziel weitere alternative Ziele festgelegt werden, die angewählt würden, falls eine Verbindung mit dem ersten Ziel nicht entsteht.

(P12) Die Funktion "Direktwahl" stellt bei nicht bestehender Verbindung ein Steuerelement für die Anwahl eines fest eingestellten Ziels bereit. Die Konfiguration erfolgt ähnlich zu (P11), wobei auch mehrere Direktwahlziele möglich sein können, die jeweils über ein eigenes Steuerelement bereitgestellt werden. Eine komplexere Variante stellt die "erweiterte Direktwahl" dar für eine größere Anzahl von Direktwahlzielen. Diese würden dann z.B. bei der Bedienung über eine Liste mit Bildlaufleiste ausgewählt werden.

(P13) Die Funktion "Verbindungssuchlaut" arbeitet eine fest eingestellte Liste von Zielen in einer festgelegten Reihenfolge ab und versucht sukzessive mit jedem Ziel eine Verbindung aufzubauen, bis die erste Verbindung gelingt. Varianten können darin bestehen, dass der Verbindungssuchlauf optional mehrfach wiederholt wird oder nach einem vollständigen Durchlauf abbricht.

(P14) Die Funktion "Nummernwahl" besteht in der klassischen Eingabe der Zielrufnummer und Anwahl derselben.

(P15) Die Funktion "Zielwahl" entspricht der Funktion (P14) mit dem Unterschied, dass keine Nummer sondern die spezifischen alphanumerischen Verbindungsparameter des Ziels, je nach Adressierungsverfahren der vorhandenen Kommunikationsumgebung eingegeben werden.

(P16) Die Funktion "Anwahl aus Telefonbuch" stellt eine Suchmaske zur Verfügung, über welche, je nach von der Kommunikationsumgebung bereitgestelltem Telefonbuchservice und Adressierungsverfahren, die Zielparameter für den gesuchten Teilnehmer ermittelt werden können.

### (P2) Annahmefunktionen

(P21) Mit der Funktion "Rufannahme" wird der Verbindungsaufbau für einen eingehenden Anruf manuell bestätigt. Für diese Funktion ist keine Konfiguration erforderlich.

(P22) Die Funktion "automatische Rufannahme" nimmt alle eingehenden Anrufe der eingestellten Ziele ohne Benutzereingriff sofort an. Die Konfiguration dieser Funktion besteht darin, die für eine automatische Rufannahme zugelassenen Ziele festzulegen.

### (P3) Basisfunktionen

(P31) Die Funktion "Lautstärke" zur Einstellung der Lautstärke.

(P32) Die Funktion "Helligkeit" zur Einstellung der Helligkeit des Bildausgabegerätes.

### (P4) Kommunikationsfunktionen

(P41) Die Funktion "Stummschaltung" schaltet den Lautsprecher ein und aus.

(P42) Die Funktion "Dunkelschaltung" schaltet den Monitor ein und aus.

(P43) Die Funktion "Mikrofon" schaltet das Mikrofon ein und aus.

(P44) Die Funktion "Kamera" schaltet die Kamera ein und aus.

(P45) Die Funktion "symmetrische Kommunikation" schaltet nur die ausgehenden Kanäle für Audio und Video ein für die auch ein Eingangssignal empfangen wird.

(P46) Die Funktion "Kameraschwenk" steuert die Kamera des verbundenen Teilnehmers. Voraussetzung hierfür ist ein während der Verbindung bestehender zusätzlicher Datenkanal über den die Steuersignale übertragen werden können. Darüber hinaus ist es erforderlich, dass die Kamera des verbundenen Teilnehmers über eine Kamera(fern-)Steuerung verfügt, und dass das audiovisuelle Kommunikationsgerät beider Teilnehmer über eine kompatible Steuerung für die Datenübertragung, die Verarbeitung der Steuersignale und die Kamerasteuerung verfügen. Die Bedienungsfunktionen sind in diesem Beispiel durch einen einfachen Taster für eine Bewegung nach Rechts oder Links realisiert. Alternative Varianten könnten lineare Regler z.B. für die horizontale und vertikale Ausrichtung vorsehen. In einer Ausführungsart der Erfindung wird der Kameraschwenk durch Sensoren gesteuert, die die Position des Bildschirms erfassen, so dass durch Bewegung des Bildschirms der gezeigte Bildsausschnitt über eine synchrone Bewegung der Kamera beim anderen Teilnehmer beeinflusst wird.

### (P5) Adressfunktionen

(P51) Die Funktion "geschlossene Benutzergruppe" definiert eine Liste von Zielen, für die ein- und ausgehende Verbindungen zugelassen werden. Andere Verbindungen werden unterdrückt. Diese Funktion kann im Zusammenhang mit den Anwahl- (P1) und Annahmefunktionen (P2) hilfreich sein, wenn die für diese Funktionen vorgesehenen Ziele weiter eingeschränkt werden sollen.

(P52) Die Funktion "Adressbuch" verwaltet eine Liste von Zielen und deren Anwahlparameter, die für die Konfiguration der Anwahl- (P1) und Annahmefunktionen (P2) verwendet werden. Die Eintragungen der Ziele und deren Pflege können durch Direkteingabe oder durch Verwendung der Telefonbuchfunktion der Kommunikationsumgebung erfolgen.

(P53) Die Funktion "Telefonbuch" verwaltet einen ggf. von dem Kommunikationsnetzwerk bereitgestellten Service, der eine große Anzahl von Zielen und deren Anwahlparameter über eine Suchfunktion zugänglich macht.

### (P6) Sonderfunktionen

(P61) Die Funktion "Rufzeichen" stellt ein Steuerelement zur Verfügung, mit dem bei bestehender Verbindung beim anderen Teilnehmer ein Rufsignal ausgelöst werden kann.
Dies kann durch Einspeisung eines akustischen Signals in den ausgehenden Audiokanal erfolgen oder über eine beim anderen Teilnehmer vorhandene Rufeinrichtung. Voraussetzung für letztere ist ein während der Verbindung bestehender zusätzlicher Datenkanal über den die Steuersignale übertragen werden können. Darüber hinaus ist es erforderlich, dass der verbundenen Teilnehmer über eine Rufeinrichtung verfügt, und dass das audiovisuelle Kommunikationsgerät beider Teilnehmer über eine kompatible Steuerung für die Datenübertragung, die Verarbeitung der Steuersignale und die Steuerung der Rufeinrichtung verfügen.

(P62) Die Funktion "Meldezeichen" fragt in periodischen Zeitabständen von dem Anwender ein Quittierungssignal ab. Bleibt dies aus, so wird ein Alarm signalisiert. Dieser kann optisch oder akustisch sein, oder ähnlich zum Rufzeichen (P61) an einen verbundenen Teilnehmer übertragen werden. Konfigurierbar ist hier der Zeitraum bis zum nächsten Meldezeichen. Eine alternative Ausführungsform dieser Funktion besteht darin, dass der Teilnehmer durch Quittierung des Meldzeichens bei dem anderen Teilnehmer eine Anzeige des genauen Zeitpunktes der Quittierung auslöst. Hierdurch ist der andere Teilnehmer stets darüber informiert, wann die letzte Quittierung stattgefunden hat.

(P63) Die Funktion "Präsenzinfo" stellt eine Reihe von Statusinformationen bereit, die von dem Teilnehmer aktiviert werden können und dem verbundenen Teilnehmer angezeigt werden. Dies kann über eine Einspeisung in den ausgehenden Videokanal erfolgen oder über eine spezielle Anzeigefunktion beim verbundenen Teilnehmer. Voraussetzung für letztere ist ein während der Verbindung bestehender zusätzlicher Datenkanal über den die Steuersignale übertragen werden können. Darüber hinaus ist es erforderlich, dass der verbundene Teilnehmer über eine Anzeigeeinrichtung für Statusinformationen verfügt, und dass die audiovisuellen Kommunikationsgeräte beider Teilnehmer über eine kompatible Steuerung für die Datenübertragung, die Verarbeitung der Steuersignale und die Steuerung der Anzeigeeinrichtung verfügen.

(P64) Die Funktion "Instant Message" entspricht der Funktion Präsenzinfo mit dem Unterschied, dass ein Freitext eingegeben werden kann, der dem verbundenen Teilnehmer, z.B. durch Einblendung in das Videosignal signalisiert werden kann. Eine weitere Variante wäre die Weitergabe des Freitextes als SMS an einen beliebigen anderen Teilnehmer.

(P65) Die Funktion "Protokoll" erzeugt eine Datei in welcher alle Verbindungsrelevanten Informationen und falls konfiguriert auch weitere Informationen über die Nutzung des Gerätes dokumentiert werden. Diese Datei kann ausgedruckt werden.

(P66) Die Funktion "Signalcheck" liefert einen Status über die Verfügbarkeit der eigenen Rufeinrichtung gemäß Funktion "Rufzeichen" (P61). Eine Realisierung dieser Funktion ist z.B. möglich, wenn die Rufeinrichtung neben einem dedizierten Lautsprecher auch über ein eigenes Kontrollmikrofon verfügt. Dadurch kann die Prüfung der Rufeinrichtung unabhängig von der Audiokonfiguration des Hauptkanals erfolgen. Der Prüfvorgang selbst läuft z.B. so ab, dass ein möglichst unauffälliges oder unhörbares Kontrollsignal nacheinander über den Hauptkanal und über die Rufeinrichtung abgesetzt wird. Abhängig von dem Vergleich der vom Hauptmikrofon und vom Kontrollmikrofon synchron gelieferten Signale kann der Zustand der Einrichtung als Fehlerhaft (kein Signal am Kontrollmikrofon oder nur Kontrollsignal des Hauptkanals) oder eingeschaltet (Signal der Rufeinrichtung am Kontrollmikrofon) bestätigt werden. Der Fehlerfall kann signalisiert werden und z.B. auch dem anderen Teilnehmer übermitteln werden. Dabei wird nicht das Audiosignal des Kontrollmikrofons übertragen, sondern lediglich das Prüfungsergebnis über den Datenkanal übermittelt. Das Kontrollmikrofon ist erforderlich, da das Hauptmikrofon ausgeschaltet sein kann.

### (P7) Multimediafunktionen

Die Funktionen Musik (P71), Film (P72), Foto (P73) liefern ein entsprechendes Signal aus einer eingestellten oder ausgewählten Quelle. Bei der Quelle kann es sich um eine abgespeicherte Audio-, Film- oder Foto-Datei handeln, oder um einen Livestream. Als einfachste Variante wäre z.B. denkbar, dass die Bedienung lediglich im Ein- oder Ausschalten der Funktion besteht, sowie in einer begrenzten Auswahl der Quelle aus einem vordefinierten Set. Die Einstellung der im Set angebotenen Quellen dagegen im Konfigurationsmodus erfolgt.

### (P8) Sonstige Funktionen

Alle zum Zeitpunkt der Offenlegung bekannten Funktionen, die als Ergänzung für das audiovisuelle Kommunikationssystem in Frage kommen. Beispiele hierfür sind GPS-Funktion (P81), Navigation (P82), Lokale Services (P83), Shopping (P84), Abonnement- Services (P85), Banking (P86), Office (P87), Haussteuerung (P88), etc.
Für dieses Beispiel wurden diese Funktionen nicht berücksichtigt.

### (P9) Systemeinstellungen

Die Systemeinstellungen (P9), wie Netzwerkeinstellungen (P91) für LAN, WLAN oder WAN, etc. oder-sofern erforderlich- Anmelde und Registrierungsfunktionen für die Kommunikationsumgebung (P92) werden lediglich im Konfigurationsmodus angeboten. Dies betrifft auch den Zugriff auf die restlichen Systemsteuerungs- und Konfigurationsfunktionen für sonstige Betriebsparameter (P93).

### Konkrete Ausgestaltung einer Bedieneinheit mit extrem einfacher Handhabung

Unabdingbare Voraussetzung für eine audiovisuelle Kommunikationseinrichtung ist die Fähigkeit derselben eine audiovisuelle Kommunikationsverbindung mit einem anderen Teilnehmer aufzunehmen. Hierzu ist mindestens eine Anwahl- (P1) oder Annahmefunktion (P2) in einem Betriebsmodus für die Bedienung erforderlich.

Ein einfacher Fall könnte aus dem automatischen Verbindungsaufbau (P11) in Verbindung mit der automatischen Rufannahme (P22). Damit kann z.B. ein erster geschützter Bedienungsmodus "Automatik" konfiguriert werden, in dem keine weiteren Funktionen verfügbar sind. Die Bedienung ist damit auf das Ein- und Ausschalten des Gerätes. ggf. ergänzt um die Basisfunktionen Lautstärke (P31) und Helligkeit (P32), reduziert. Beim Einschalten würde sofort der Versuch eines Verbindungsaufbaus gestartet. Kommt dieser nicht zustande oder wird eine bestehende Verbindung beendet, dann bleibt das Gerät in Bereitschaft, bis ein Anruf eingeht, oder das Gerät wieder ausgeschaltet wird. Die Konfiguration dieser Funktion würde in einem separaten Konfigurationsmodus erfolgen, der jedoch bei der Bedienung des Gerätes nicht direkt zugänglich ist.

Ein weiterer geschützter Betriebsmodus "Direkt" könnte z.B. neben der Rufannahme (P21) lediglich aus der Direktwahlfunktion (P12) und dem Verbindungssuchlauf (P13) bestehen. Damit wäre die Bedieneinheit auf wenige Taster oder Buttons reduziert mit denen eine begrenzte Zahl von Zielen angewählt oder ein Anruf entgegengenommen wird.

Auf diese Weise können beliebige, der jeweiligen Anforderung entsprechende Bedienungsmodi gestaltet werden. Alle nicht benötigten Funktionen werden entweder gar nicht oder in weiteren Bedienungs- und Konfigurationsmodi bereitgestellt.

Bei der Konfiguration der Bedienungsmodi sind für die Konfigurationsmodi die in Fig. 8a., 8b., 8c. in der letzten Spalte genannten Voraussetzungen für die bereitgestellten Funktionen zu berücksichtigen, damit die Funktion vollständig konfiguriert werden kann. Ebenso ist ein Zugang zu den Systemeinstellungen (P9) wie Netzwerk (P91) und, sofern erforderlich, zu Anmelde- und Registrierungsfunktionen für die Kommunikationsumgebung (P92) mindestens in einem Konfigurationsmodus vorzusehen.

Durch die Flexibilität in der Zusammenstellung der Funktionalitäten ist es möglich jeder spezifischen und individuellen Anforderung an die Funktionalität des Gerätes mit erfindungsgemäß einfacher Handhabung eine entsprechende Konfiguration der Bedieneinheit bereitzustellen.

### 4. Technische Realisierung der Konfiguration einer Bedieneinheit

Grundsätzlich kann die vorgehend beschriebene Zuordnung von Steuerelementen der Funktionen des Kommunikationsgerätes und der genannten Bedienungs- und Konfigurationsmodi durch eine individuelle Implementierung softwaretechnischer Methoden für eine konkret zu gestaltende Bedieneinheit erreicht werden.

Dazu ist es erforderlich, dass das Computersystem und die Kommunikationsanwendung des audiovisuellen Kommunikationsgerätes über Programmschnittstellen verfügen, die mindestens einen Zugriff auf die Kommunikationsfunktionen und die Steuerelemente der Bedieneinheit ermöglichen. Bei Standard Computersystemen, die am Markt erhältlich sind, können in der Regel alle Peripheriegeräte über Treiberschnittstellen und Betriebssystemfunktionen angesprochen werden. Ebenso sind auf dem Markt proprietäre aber auch frei zugängliche Kommunikationssysteme (z.B. auf Basis des SIP Protokolls oder auf Basis von Peer-to-Peer Technologien) erhältlich, deren Funktionen über Programmschnittstellen angesprochen werden können.

Verfügt eine Kommunikationsverbindung über einen zusätzlichen Datenkanal, so ist über diesen ein Datenaustausch und ein Aufruf von Funktionen eines anderen Gerätes über deren Programmschnittstellen möglich. Damit ist eine Fernbedienung des Gerätes und seiner Anwendungen, sowie weiterer angeschlossener Peripheriegeräte möglich. In der Regel sollte die Freigabe von Programmschnittstellen für den Zugang über einen Datenkanal an eine Freigabefunktion gekoppelt sein. Diese kann so realisiert werden, dass für jede Funktion festgelegt wird über welche Ziele sie fernsteuerbar sein soll. Diese Funktionalität ist von der Steuerung des Datenkanals bereitzustellen, über den die Aufrufe erfolgen.

Für die erfindungsgemäße flexible Gestaltung von Bedieneinheiten mit einfacher Handhabung kann es hilfreich sein auf einen Konfigurator zurückzugreifen, der die Definition von Betriebsmodi und die Konfiguration der Bedieneinheiten auf einfache Weise über eine entsprechende Benutzeroberfläche ermöglicht.

### Konfigurator für eine Bedieneinheit

Ausgehend von einem audiovisuellen Kommunikationssystem das mit mehreren Anwendungen, z.B. Multimediaanwendungen, darunter z.B. ein Videokommunikationssystem ausgestattet ist, und die zu mindest teilweise über Programmschnittstellen zur Steuerung von Funktionen derselben verfügen, und das weiterhin mit einer Bedieneinheit ausgestattet ist, deren Steuerelemente zu mindest teilweise über eine Programmschnittstelle angesprochen werden können, so kann man für die über Programmschnittstellen ansprechbaren Funktionen und Steuerelemente einen Konfigurator für die Bedieneinheit wie folgt darstellen:

Für jeden zu definierenden Betriebsmodus werden mit Hilfe des Konfigurators
1. in einem ersten Schritt aus einer Aufstellung aller Anwendungen und aller ihrer jeweiligen Funktionen die Funktionen ausgewählt, die in dem genannten Betriebsmodus bereitgestellt werden sollen. Für Anwendungen, die nicht über eine Programmschnittstelle angesprochen werden können, wäre zumindest der Aufruf der Anwendung als Funktion auswählbar. Letzteres könnte z.B. auch für den Konfigurator selbst und den Zugriff auf die Systemfunktionen und die Systemkonfiguration gelten.
2. in einem zweiten Schritt aus einer Aufstellung aller Steuerelemente für alle ausgewählten Funktionen des genannten Betriebsmodus die für die Funktion relevanten Steuerelemente und, soweit hier eine Auswahl besteht, deren Gestaltungsform zugeordnet. Z.B. kann die Funktion Lautstärke über ein diskretes Steuerelement (lauter, leiser) oder ein lineares Steuerelement (Lautstärkeregler) gesteuert werden, so dass hier zwei Gestaltungsformen alternativ möglich sind.
3. in einem dritten Schritt eine Menüstruktur durch Angabe der Anzahl der Menüs und ihrer Menüstruktur festgelegt. Hierzu ist ergänzend eine Festlegung aller gewünschten Menüübergänge vorzunehmen, so dass alle Menüs über mindestens einen Pfad erreichbar sind.
4. in einem vierten Schritt werden die im zweiten Schritt ausgewählten Steuerelemente den im dritten Schritt festgelegten Menüs zugeordnet.

Bei diesem Verfahren ist sicherzustellen, dass für alle Funktionen alle relevanten Steuerelemente in zumindest einer Ausprägung in mindestens einem Betriebsmodus verfügbar gemacht werden. Hilfreich könnte es zum Beispiel sein, immer einen Betriebsmodus als Master-Betriebsmodus so zu definieren, dass in ihm alle relevanten Steuerelemente aller Funktionen vorhanden sind. Alternativ könnte auch ein Betriebsmodus definiert werden, der alle sonst nicht verfügbaren Steuerelemente aufnimmt. Letztere beide Alternativen könnten durch den Konfigurator auch automatisch erstellt werden, in dem eine Standardmenüstruktur zu Grunde gelegt wird und die Steuerelemente auf diese automatisch verteilt werden. Die Standardmenüstruktur könnte z.B. eine Baumstruktur sein mit einer Auswahl der Anwendungen auf dem Stammmenü und für jede Anwendung ein oder mehrere Menüs für die Aufnahme der für diese Anwendung relevanten Funktionen und Steuerelemente.

Dadurch kann auch sichergestellt werden, dass mindestens ein Betriebsmodus existiert, der Zugriff auf die Systemfunktionen und die Systemkonfiguration ermöglicht. Ebenso wäre der Konfigurator selbst als Anwendung zu betrachten, die über mindestens einen Betriebsmodus verfügbar ist.

5. in einem letzten Schritt wird angegeben welcher Betriebsmodus beim Einschalten des Gerätes aktiviert wird und wie die Übergänge zwischen den Betriebsmodi erfolgen sollen. Hierzu ist eine Festlegung aller gewünschten Übergänge zwischen Betriebsmodi vorzunehmen, so dass alle Betriebsmodi über mindestens einen Pfad erreichbar sind. Für jeden Übergang ist ebenso festzulegen über welches Steuerelement er ausgelöst werden soll und ob die in dem jeweiligen Betriebsmodus aktivierten Anwendungen beim Verlassen zwangsweise oder optional beendet werden. Für die Betriebsmodi, die einzeln oder als Gruppe geschützt sein sollen, sind an die Übergänge die zu einem Verlassen dieses oder dieser Gruppe führen besondere Anforderungen zu stellen, so dass ein unbeabsichtigtes Verlassen ausgeschlossen oder erschwert ist. Beispiele hierfür sind im Abschnitt für die Definition eines geschützten Betriebsmodus genannt.

Weiterhin könnte der Konfigurator auch über eine Editorfunktionalität verfügen mit welcher nach erfolgter Konfiguration der Bedieneinheit das Erscheinungsbild der Steuerelemente auf den jeweiligen Menüs in den verschiedenen Betriebsmodi verändert werden kann. Dies könnte durch Veränderung der geometrischen Anordung, der farbliche Gestaltung und der optionalen Hinterlegung mit Klängen bei User-Events ausgestaltet sein.

Eine Realisierung eines derartigen Konfigurators ist mit den zum Standard der Technik gehörenden objektorientierten Programmiersprachen ohne weiteres möglich. Erforderlich hierzu ist eine Zwischenschicht (Wrapper) von Objekten, die die Schnittstellen der Anwendungen und der Steuerelemente derart abstrahieren, so dass diese dann flexibel einander zugeordnet und in die oben genannten Menüstrukturen eingebettet werden können. Ebenso ist es erforderlich, dass diese Objekte über Eigenschaften verfügen, die eine Veränderung ihrer Gestaltung und Anordnung in einem Menü ermöglichen. Diese Zwischenschicht ist für jede Anwendung, die auf das audiovisuelle Kommunikationsgerät aufgespielt wird, zu erstellen und ist Bestandteil der Erfindung.

In Fig. 9 ist beispielhaft eine Aufstellung einiger möglicher Objektklassen, die zur Realisierung eines derartigen Konfigurators hilfreich sein könnten dargestellt. Eine mögliche Benutzeroberfläche eines solchen Konfigurators könnte sich in Ihrem Aufbau z.B. an einer marktüblichen integrierten Softwareentwicklungsumgebung (SDE) für objektorientierte Sprachen anlehnen, wobei sie natürlich entsprechend angepasst und vereinfacht sein sollte.

Die über den Konfigurator erstellen Menüstrukturen wären dann in eine grafische Darstellung unter Verwendung einer beliebigen, marktüblichen, grafischen Objektbibliothek zu überführen. Wird das erfindungsgemäße Steuerungsverfahren aufgerufen, so werden über Aufrufe der Objektbibliothek in der definierten Menüstruktur die Steuerelemente bereitgestellt. Werden diese durch Benutzeraktionen aktiviert, so werden von dem Steuerungsverfahren die den Steuerelementen zugeordneten Funktionen über deren Programmschnittstellen aufgerufen.

### Fernbedienbarer Konfigurator

Werden alle Funktionen des beschriebenen Konfigurators, also Auswahl, Gestaltung und Zuordnung von Steuerelementen und Funktionen zu Menüs einer Menüstruktur für verschiedene Betriebsmodi über eine Programmschnittstelle verfügbar gemacht, so können diese über einen separaten Datenkanal und eine Datenkommunikation bei einer bestehenden Verbindung auch von einem anderen Gerät aus ferngesteuert werden.

Hilfreich ist es daher, dass der Konfigurator in einer Ausführungsform auch über eine Funktionalität verfügt, mit der die Funktionen und die Steuerelemente eines über eine Datenkommunikation verbundenen anderen Gerätes importiert und in die Funktionen des Konfigurators integriert werden können. Damit würden in dem Konfigurator neben den Funktionen und Steuerelementen des eigenen Gerätes auch die Funktionen und Steuerelemente des anderen Gerätes verfügbar sein.

Wird dies für mehrere gleichzeitig mit einem Gerät verbundene andere Geräte durchgeführt, ist es möglich über den Konfigurator, den Datenaustausch mit den anderen Geräten und den Programmschnittstellen mit den Konfiguratoren der anderen Geräte die Konfiguration aller Bedienungseinheiten von einem Gerät aus durchzuführen. Ebenso ist es möglich Steuerelemente eines Gerätes der Bedieneinheit eines anderen Gerätes zuzuordnen.

Für alle diese Fälle müssen die Objektklassen der Funktionen, Steuerelemente, Menüs und Betriebsmodi jeweils auch die Identifikationen der Ursprungsgeräte mitführen. Die Steuerelemente können nur dann verwendet werden, wenn eine Kommunikationsverbindung mit dem entsprechenden Gerät besteht. Werden die mit dem erfindungsgemäßen Steuerungsverfahren bereitgestellten Menüs und dazugehörigen Steuerelemente durch Benutzeraktionen aktiviert, so werden von dem Steuerungsverfahren die den Steuerelementen zugeordneten Funktionen des jeweiligen verbundenen Gerätes über den Datenkanal und deren Programmschnittstellen (fern)aufgerufen.

In Fig. 10 ist eine beispielhafte Darstellung einer Ansicht der Benutzeroberfläche des Konfigurators aufgezeigt. Auf der linken Seite werden die integrierten Geräte (Gerät 1, Gerät 2) mit ihren Funktionen (Fkt. 1, Fkt. 2) und den jeweiligen Steuerelementen (St. 1, St. 2, St.3) aufgeführt. Auf der rechten Seite sind die für die Geräte (Gerät 1, Gerät 2) definierten Betriebsmodi (BM1, BM2) und die dazugehörigen Menüs (Mn.1, Mn.2, Mn. 3) dargestellt. In der Mitte wird ein ausgewähltes Menü (Gerät 1 - BM 3 - Mn. 1), das erste Menü im dritten Betriebsmodus des ersten Gerätes gezeigt, auf das zwei Steuerelemente von zwei Funktionen zweier verschiedener Geräte dargestellt sind, und zwar: das erste Steuerelement der dritten Funktion des ersten Gerätes (G1-Fkt.3-St.1) und das erste Steuerelement der dritten Funktion des zweiten Gerätes (G2-Fkt.3-St.1).

In Fig. 11 ist die Realisierung einer Bedienungseinheit dargestellt mit einem Fenster in der Mitte für die Videoübertragung (BDS), links 4 Steuerelemente (St.5, ..., St. 8), z.B. für die Direktwahl von 3 Zielen und die Rufannahme, rechts 4 weitere Steuerelementen (St. 9,..., St. 12) für die Funktionen Lautstärke (+/-) und Helligkeit (+/-).

### Authentifizierung, Autorisierung und 4-Augen Prinzip

Authentifizierungssysteme sind weit verbreitet. Ordnet man eine Gruppe von Funktionen einer Rolle zu und diesen Rollen Personen, so ergibt sich hieraus ein Autorisierungssystem, in welchem jeder Person ein eindeutiges an eine oder mehrere Rollen geknüpftes Benutzerprofil, durch welches für jede Person genau festgelegt ist über welche Funktionen sie verfügen kann. Ein solches Autorisierungssystem setzt natürlich voraus, dass die entsprechenden Personen am System eindeutig erkannt bzw. authentifiziert werden. Hierzu wird in der Regel beim Anmelden ein benutzerspezifisches Passwort abgefragt, welches bei der erstmaligen Registrierung definiert worden ist.

Im Bankenumfeld ist das 4-Augen Prinzip weit verbreitet. Es dient dazu bei wichtigen Transaktionen sicherzustellen, dass diese erst ausgeführt wird, wenn auch eine zweite Person diese Transaktion bestätigt hat. Für die Verwendung des audiovisuellen Kommunikationsgerätes kann es sinnvoll sein für bestimmte Funktionen ein solches Prinzip zu fordern. Für Funktionen, die einem solchem Prinzip unterworfen werden, muss ein erstes Steuerelement von einer Person aktiviert werden um die Funktion zu beanspruchen. Im Anschluss muss dieser Anspruch noch von einer zweiten Person bestätigt werden, bevor die Funktion ausgeführt wird.

### 5. Anordnung für eine intuitive Kamerasteuerung

Verfügt eine Kamera über eine Motorensteuerung, und kann diese über den während einer Verbindung zusätzlich bestehenden Datenkanal Ferngesteuert werden, so ist für die Nutzung dieser Funktion ein Steuerelement erforderlich, dass die Bewegung vorgibt.

In Fig. 12 ist eine Sicht von oben eines Bildschirmhalters (BHa) gezeigt, der sich um eine Achse (Ac) des Scharniers (Ha) bis zum Anschlag an der Halteplatte (PL) frei bewegen kann.

In Fig. 13 ist der gleiche Halter von vorne gezeigt. Die Halteplatte (PL) trägt ein Scharnier (Ha) für die Drehachse (Ac) des Bildschirmhalters. An der Achse (Ac) ist unten ein Drehpotentiometer (DP) als Sensor für die Winkelstellung des Halters angebracht.

Wird das Sensorsignal z.B. über einen Analog Digital Wandler an ein Computersystem übertragen und von diesem als Steuersignal für die besagte Kamerasteuerung verwendet, so würde durch eine Bewegung des Bildschirms die Kamera beim anderen Teilnehmer entsprechend gesteuert. Eine entsprechende Kalibrierung vorausgesetzt wurde hierdurch eine intuitive Veränderung des Betrachtungswinkel und des gezeigten Bildschirmausschnittes durch einfache Bewegung des Bildschirmes erfolgen.

Natürlich sind auch entsprechende Konstruktionen für 2dimensionale Steuerungen mit 2 Sensoren möglich. Hierzu könnte die in Fig. 12 und Fig. 13 gezeigte Anordnung z.B. dupliziert werden und die zweite Version um 90° versetzt hinter die erste montiert werden.

Ebenso ist eine Konstruktion möglich in der auf derselben Achse, auf der das Drehpotentiometer sich befindet auch ein Drehmotor oder Servo (SM) befestigt wird. Hierdurch könnte über einen Digital-Analog Wandler und eine Schnittstelle zum Computersystem der Bildschirm über eine Fernbedienung bewegt werden. In einer symmetrischen Konfiguration von zwei mit einer integrierten Kamera ausgestatteten Bildschirmen, würden sich die beiden Bildschirme stets synchron bewegen.

### 6. Installationsverfahren für ein Steuerungsverfahren eines audiovisuellen Kommunikationsgerätes mit einfacher Handhabbarkeit

Ein wichtiger Aspekt für die einfache Handhabung eines audiovisuellen Kommunikationsgerätes ist, dass der Zugriff auf das zugrunde liegende Computersystem und die Kommunikationsanwendung nicht direkt möglich ist. In den meisten Fällen bieten das Computersystem und die Kommunikationsanwendung umfangreiche Funktionalitäten, so dass hierdurch die Bedienung ungleich komplexer würde.

Ein einfacher Weg um dies zu erreichen ist der Betrieb des Computersystems und der Kommunikationsanwendung im Hintergrund. Hierzu wird das genannte Steuerungsverfahren als einziges Verfahren im Vordergrund gestartet. Ein Zugriff auf das Computersystem über seine Benutzerschnittstelle (Shell) ist dann nicht möglich, ebenso werden keine Systemmeldungen angezeigt, da sie im Hintergrund auf eine Datei geschrieben werden. Ein solcher Betrieb ist auch als Kiosk-Betrieb bekannt.

Möchte man das Computersystem und ggf. auch andere Anwendungen des Gerätes einem Zugriff weiterhin offen halten, so besteht die Möglichkeit, dass der Kiosk Betrieb nur für einen Benutzer des Computersystems eingerichtet wird. Wird ein anderer Benutzer angemeldet, so steht ihm weiterhin der Zugriff auf das Computersystem und alle Anwendungen zur Verfügung.

Steht allerdings die einfache Bedienbarkeit und Handhabung im Vordergrund, kann es sinnvoll sein, den Kiosk-Modus so einzurichten, dass dieser bereits beim Hochfahren des Systems eingenommen wird, bzw. das automatisch nur der Benutzer angemeldet wird, dessen Arbeitsumgebung als Kiosk-Modus eingerichtet wurde. Oft kann man z.B. dem BIOS des Computersystems mehrere Computersysteme für das Hochfahren zur Auswahl anbieten. Standardmäßig wäre dann das Computersystem mit dem eingerichteten Kiosk-Modus für die Steuerung des Gerätes eingerichtet.

Um auch die Installation des Systems selbst zu vereinfachen, wird das Installationsverfahren vorab in einen Speicherbereich des Gerätes kopiert, so dass es beim ersten Starten des Gerätes automatisch ausgeführt wird.

Dabei kann es sinnvoll sein, die Netzwerkeinstellungen und die Konfiguration der Kommunikationsumgebung des Gerätes z.B. so mit Standardwerten zu belegten, dass für eine gegebene Systemumgebung keinerlei weiteren Einstellungen erforderlich sind.

Wird z.B. mit dem Gerät ein WLAN-Router ausgeliefert, so können die Netzwerkeinstellungen des Gerätes mit denen des Routers bereits abgestimmt sein. Ebenso könnten die Zugangs- und Einwahlparameter, sowie die Teilnehmerdaten für die Kommunikationsumgebung des verwendeten Providers bereits voreingestellt sein, zumindest für einen Gast-Account.

Sind die Einstellungen dennoch anzupassen, so wird hierfür ein Dialog bereitgestellt, der entweder bei der Einrichtung des Installationsverfahrens, also vor seinem Start, während des Installationsvorgangs, oder danach die anzupassenden Paramter abfragt.

Natürlich besteht auch weiterhin die Möglichkeit, dass in einem bestimmten Betriebsmodus ein direkter Zugang auf die Funktionen und Parameter des Computersystems und der Kommunikationsumgebung gewährt wird.

### Wirtschaftliche Verwertungsmöglichkeit

Durch die flexible und freie Konfigurierbarkeit der Bedieneinheit erschließen sich über all dort Anwendungsmöglichkeiten, wo spezielle Anforderungen an die Handhabung und Verwendung eines audiovisuellen Kommunikationsgerätes gestellt werden. Im Gegensatz zu speziell für diesen Zweck konstruierte Geräte, kann aufgrund der flexiblen Konfigurierbarkeit auch ein für viele Einsatzzwecke geeignetes Standardgerät mit entsprechend höheren Stückzahlen und niedrigeren Preisen verwendet und einfach individuell an die jeweiligen Anforderungen angepasst werden.

Die Erfindung eignet sich z.B. für den Einsatz bei dauerbetriebenen audiovisuellen Kommunikationsverbindungen. Da es in diesem Fall oft vorkommen kann, dass die Verbindung ohne aktive Beteiligung der Teilnehmer aufrecht erhalten wird (ähnlich zu einem im Hintergrund laufenden Fernseher), kann es nützlich sein, den anderen Teilnehmer herbeirufen zu können. In diesem Falle ist es ausschlaggebend, dass das Absetzen eines Rufsignals immer sichergestellt werden kann. Ein gewerbliches Einsatzgebiet könnte z.B. die Betreuung von Pflegebedürftigen sein, die über eine ständige audiovisuelle Kommunikationsverbindung mit einer Pflegestation verbunden sind und im Bedarfsfall einen Hilferuf absetzen können. Hierzu sind insbesondere auch die vielfältigen Möglichkeiten der Fernbedienung und Fernkonfiguration zur Unterstützung des Pflegebedürftigen sehr nützlich.

## Patentansprüche

1. Verfahren zur Steuerung eines bidirektionalen audiovisuellen Kommunikationsgerätes mit dem Zweck die Handhabung erheblich zu vereinfachen, bestehend aus
(a) einer Standard Hardware Konfiguration für ein bidirektionales audiovisuelles Kommunikationsgerät bestehend aus mindestens jeweils einem Bild- und Ton-Wiedergabesowie Aufnahmegerät, inklusive mindestens eines Netzanschlusses mit Zugang zu mindestens einem beliebigen Kommunikationsnetzwerk, ggf. um etwaige weitere Komponenten erweitert,
(b) einem, entsprechend installierten und konfigurierten Computersystem für die Steuerung aller Komponenten des audiovisuellen Kommunikationsgerätes einschließlich der Bedieneinheit, sonstiger Ein- und Ausgabegeräte, des Prozessors, des Speichers, des Netzanschlusses und etwaiger weiterer Komponenten,
(c) mindestens einer Kommunikationsumgebung für die Steuerung des Zugangs zu mindestens einem Kommunikationsnetzwerk, des Verbindungsaufbaus und beliebiger weiter Funktionen der audiovisuellen Kommunikation zu mindestens einem anderen Endgerät, die von einem entsprechend installierten, konfigurierten und über eine Programmschnittstelle gesteuerten Kommunikationssystem verwaltet wird,
(d) etwaigen weiteren, ggf. multimedialen Anwendungssystemen,
**dadurch gekennzeichnet, dass**
(a) das Steuerungsverfahren zur Steuerung der von dem Computersystem gesteuerten Komponenten und der von dem Kommunikationssystem gesteuerten Kommunikationsumgebung auf Programmschnittstellen des Computersystems und des Kommunikationssystems zugreift,
(b) das Steuerungsverfahren mindestens einen Betriebsmodus aufweist, in welchem zur Bedienung von Funktionen des audiovisuellen Kommunikationsgerätes auf durch Benutzeraktionen beeinflussbare Zustände oder auslösbare Ereignisse von Steuerelementen zurückgegriffen wird (im Folgenden Bedienungsmodus genannt),
(c) in dem oder den Gleichen genannten Betriebsmodi oder mindestens einem weiteren Betriebsmodus zur Bedienung oder Konfiguration von Funktionen des audiovisuellen Kommunikationsgerätes auf durch Benutzeraktionen beeinflussbare Zustände oder auslösbare Ereignisse von Steuerelementen zurückgegriffen wird (im Folgenden Konfigurationsmodus genannt),
(d) die Handhabbarkeit der von dem Steuerverfahren für die Handhabung des Gerätes relevanten, gesteuerten Bedieneinheit eine durch die Werte (I, J, K, L) näher spezifizierte Komplexität aufweist, wobei
i. 1 für den maximalen Freiheitsgrad der für die Handhabung des Gerätes relevanten Steuerelemente steht, und mit ansteigender Komplexität in dieser Reihenfolge die Werte I=1="diskret", I=2="linear", I=3="Liste", I=4="2-dimensional" und I=5="3-dimensional", I=6="Zahl" und I=7="Text" einnehmen kann,
ii. J für die maximale Zahl der in Kombination gleichzeitig verwendeten, einer für die Handhabung relevanten Funktion zugeordneten Steuerelemente steht, wobei J=1, 2, 3, ...,
iii. K für die maximale Zahl der einem Steuerelementen zugeordneten für die Handhabung relevanten Funktionen steht, mit K=0, 1, 2, ... und
iv. L für die Komplexität der Anordnung und Verfügbarkeit der für die Handhabung des Gerätes relevanten Steuerelemente oder der Menüstruktur der Bedieneinheit steht, und mit ansteigender Komplexität in dieser Reihenfolge die Werte L=(1, M)="Baumstruktur mit M Ebenen", L=(2, N)="Netzstruktur mit maximal N Pfaden zwischen zwei Menüs" und L=3="multidimensionaler Zustandsraum" einnehmen kann. M und N kennzeichnen dabei den Grad der Komplexität einer Menüstruktur mit ansteigendem Zahlenwert, wobei L=(1, M), M= 1, 2, 3, ...für Baumstrukturen und L=(2; N), N= 2, 3, 4, ... für Netzstrukturen.
(e) der Vergleich der Komplexität (I, J, K, L) einer von dem Steuerungsverfahren gesteuerten Bedieneinheit mit der Komplexität (I', J', K', L') einer Bedieneinheit eines anderen Gerätes wie folgt gegeben ist:
i. die Komplexitäten sind vergleichbar, also (I, J, K, L) = (I', J', K', L'), wenn für alle I=I', J=J', K=K' und L=L' gilt.
ii. die Komplexitäten (I, J, K, L) ist niedriger als die Komplexität (I', J', K', L'), d.h. (I, J, K, L) < (I', J', K', L'), wenn mindestens einer der Werte I, J, K oder L kleiner als die Werte I', J', K' oder L' ist, keiner aber größer. Im Falle dass L=(L, x)=L'=(L, x'), wird der Rang der Komplexität in Bezug auf die Menüstruktur im Falle einer Baumstruktur durch Vergleich der Zahl der Ebenen x=M, x'=M', im Fall einer Netzstruktur durch Vergleich der maximalen Zahl der Pfade x=N, x'=N' festgestellt.
(f) ein Betriebsmodus dann als geschützt gilt, wenn ein unabsichtliches Verlassen des geschützten Modus nicht möglich oder erschwert ist, dadurch dass entweder
i. das Verlassen durch ein Passwort geschützt ist, oder
ii. das Verlassen eine kombinierte Verwendung von Steuerelementen (z.B. Tastenkombination) erfordert, die aus mindestens einem Element mehr besteht, als die für sonstige Funktionen in diesem Modus verwendeten Kombinationen von Steuerelementen,
iii. das Verlassen über eine dediziert ausschließlich nur für diesen Zweck bereitgestellte Sonderfunktionstaste erfolgt.
iv. das Verlassen nur über eine Rückfrage mit erforderlicher Bestätigung durch den Anwender möglich ist.
(g) mindestens ein Bedienungsmodus geschützt ist,
(h) mindestens einer der unter (g) genannten geschützten Bedienungsmodi über mindestens eine Anwahl- oder Annahmefunktion für den Aufbau einer audiovisuellen Kommunikationsverbindung verfügt,
(i) die Handhabbarkeit der Bedieneinheit innerhalb mindestens eines der unter (h) genannten geschützten Bedienungsmodi mit mindestens einer Anwahl- oder Annahmefunktion, durch die Werte (I*, J*, K*, L*) seiner Komplexität näher spezifiziert ist,
(j) für die genannte Komplexität (I*,J*,K*,L*) <= (I₀,J₀,K₀,L₀) gilt, wobei (I₀,J₀,K₀,L₀) eine beliebige Komplexität aus dem wie folgt definierten Parameterraum ist:
i. I₀ <= 5 für beliebige J₀, K₀, L₀, d.h. es werden mindestens keine Text- oder Zahlenfelder verwendet,
ii. J₀ = 1 für beliebige I₀, K₀, L₀, d.h. es erfolgt keine kombinierte Verwendung von Steuerelementen,
iii. K₀ = 1 für beliebige I₀, J₀, L₀, d.h. es erfolgt keine Mehrfachbelegung von Steuerelementen,
iv. L₀ = (1, M₀), mit M₀<=10 für beliebige I₀, J₀, K₀ und Festlegung eines Menüs mit der genannten Anruf- oder Annahmefunktion im Stammmenü, d.h. eine Anwahl oder Annahme einer Kommunikationsverbindung ist immer nach maximal M₀ Menüwechsel möglich.
(k) für das Verlassen des genannten geschützten Bedienungsmodus die genannten Einschränkungen nicht gelten.

2. Verfahren nach Anspruch 1
• **dadurch gekennzeichnet, dass**
(a) das Verfahren in mindestens einem genannten Konfigurationsmodus über einen Konfigurator der Bedienungseinheit verfügt,
(b) der Konfigurator für mindestens eine Anwendung und für Steuerelemente der Bedieneinheit über eine programmtechnische Zwischenschicht (Wrapper) und eine Konfigurationsebene verfügt, mit dem
i. Funktionen der genannten Anwendung mindestens einem Betriebsmodus zugeordnet werden können,
ii. Steuerelemente der Bedienungseinheit den ausgewählten Funktionen zugewiesen werden können,
iii. eine Menüstruktur definiert werden kann,
iv. die Steuerelemente den Menüs der Menüstruktur zugewiesen werden können,
v. Steuerelemente für die Übergänge zwischen den Menüs der Menüstruktur zugewiesen werden können,
vi. Sichergestellt wird, dass jede Funktion der genannten Anwendung in mindestens einem Betriebsmodus verfügbar ist.
(c) der genannte Konfigurator über eine Möglichkeit verfügt
i. unterschiedliche Betriebsmodi zu konfigurieren,
ii. einzelne Betriebsmodi in genannter geschützter Ausführung zu konfigurieren.

3. Verfahren nach mindestens einem der vorherigen Ansprüche
• **dadurch gekennzeichnet, dass**
(a) mindestens ein Konfigurationsmodus geschützt ist,
(b) die Handhabbarkeit der Bedieneinheit innerhalb des genannten geschützten Konfigurationsmodus durch die Werte (I, J, K, L) seiner Komplexität näher spezifiziert ist,
(c) für die genannte Komplexität (I, J, K, L) <= (I₁, J₁, K₁, L₁) gilt, wobei (I₁, J₁, K₁, L₁) eine beliebige Komplexität aus dem wie folgt definierten Parameterraum ist:
i. I₁ <= 5 für beliebige J₁, K₁, L₁, d.h. es werden mindestens keine Text- oder Zahlenfelder verwendet,
ii. J₁ = 1 für beliebige I₁, K₁, L₁, d.h. es erfolgt keine kombinierte Verwendung von Steuerelementen,
iii. K₁ = 1 für beliebige I₁, J₁, L₁, d.h. es erfolgt keine Mehrfachbelegung von Steuerelementen,
iv. L₁ = (1, M₁), mit M₁<=10 für beliebige I₁, J₁, K₁
(d) für das Verlassen des genannten Konfigurationsmodus die genannten Einschränkungen nicht gelten.

4. Verfahren nach mindestens einem der vorgehenden Ansprüche
• **dadurch gekennzeichnet, dass**
(a) eine audiovisuelle Kommunikationsverbindung mit einem zusätzlichen Datenkanal mit mindestens einem weiteren mit dem genannten Verfahren gesteuerten audiovisuellen Kommunikationsgerät besteht,
(b) über den bestehenden Datenkanal ein Datenaustausch zwischen den genannten Steuerungsverfahren der miteinander verbundenen audiovisuellen Kommunikationsgeräte erfolgt,
(c) über den genannten Datenaustausch Funktionen eines ersten mit dem genannten Verfahren gesteuerten Gerätes mit dem genannten Verfahren mindestens eines zweiten Gerätes über eine Schnittstelle angesprochen werden, so dass eine Fernbedienung der Funktionen des ersten Gerätes von einem anderen, mindestens von einem zweiten, Gerät aus erfolgt,
(d) durch das Verfahren des genannten ersten Gerätes der Umfang der Fernbedienung einzelner Funktionen durch die genannten anderen Geräte mittels einer Rechtevergabe am ersten Gerät festgelegt wird,
(e) durch die genannte Rechtevergabe je Funktion des ersten Gerätes festgelegt ist, durch welches andere Gerät die Fernbedienung dieser Funktion bei bestehender Verbindung erfolgt,
(f) durch das Verfahren des ersten Gerätes sichergestellt ist, dass eine Fernbedienung seiner Funktionen nicht möglich ist, wenn das verbundene zweite Gerät hierzu nicht berechtigt ist.
(g) die Fernbedienung nicht nur für Funktionen des ersten mit dem genannten Verfahren ferngesteuerten Gerätes, sondern auch für durch dieses erste Gerät ferngesteuerte Funktionen eines durch das genannte Verfahren ferngesteuerten dritten Gerätes von einem anderen durch das genannte Verfahren gesteuerten zweiten Gerät aus erfolgt.
(h) das genannte zweite Gerät für die Fernsteuerung der Funktionen des genannten dritten Gerätes hierfür beim genannten ersten Gerät, nicht jedoch beim genannten dritten Gerät berechtigt sein muss.

5. Verfahren nach mindestens einem der vorhergehenden Ansprüche
• **dadurch gekennzeichnet, dass**
(a) Funktionen mindestens eines ersten Gerätes gemäß Anspruch 4 über ein zweites Gerät fernbedienbar sind,
(b) das Verfahren des zweiten Gerätes über einen Konfigurator der Bedienungseinheit gemäß Anspruch 2 verfügt,
(c) der Konfigurator darüber hinaus für die Konfiguration der Bedieneinheit, d.h. für die Zuordnung von Steuerelementen der Bedieneinheit zu Funktionen und Menüs, auch die genannten fernbedienbaren Funktionen des ersten Gerätes integriert.

6. Verfahren nach mindestens einem der vorgehenden Ansprüche
• **dadurch gekennzeichnet, dass**
(a) Funktionen mehrerer, mindestens aber eines ersten Geräte(s) gemäß Anspruch 4 über das Verfahren eines zweiten Gerätes fernbedienbar sind,
(b) das genannte Verfahren des zweiten Gerätes über einen, fernbedienbar Funktionen integrierenden, Konfigurator der Bedienungseinheit gemäß Anspruch 5 verfügt,
(c) einige der genannten ersten Geräte, mindestens aber eines davon, ebenso über Konfiguratoren ihrer Bedieneinheiten gemäß Ansprüche 2 oder 5 verfügen,
(d) zu den fernbedienbaren Funktionen der genannten ersten Geräte auch einige der Konfiguratoren der Bedieneinheiten dieser Geräte zählen,
(e) der Konfigurator des genannten Verfahren des zweiten Gerätes darüber hinaus die fernbedienbaren Konfiguratoren der ersten Geräte integriert, d.h. dass
i. neben den Steuerelementen der Bedieneinheit und der Menüstruktur des zweiten Gerätes auch die Steuerelemente der Bedieneinheiten und die Menüstrukturen der ersten Geräte mit fernbedienbaren Konfiguratoren zur Auswahl zur Verfügung stehen,
ii. die gemäß Anspruch 5 integrierten fernbedienbaren Funktionen der ersten Geräte auch den Steuerelementen der Bedieneinheiten und den Menüs der jeweiligen Geräte mit fernbedienbaren Konfiguratoren zugeordnet werden können,
iii. falls Funktionen eines der genannten ersten Geräte von mindestens einem anderen der ersten Geräte mit fernbedienbaren Konfiguratoren fernbedienbar sind, so können diese integrierten Funktionen auch den Steuerelementen der Bedieneinheit dieser anderen Geräte mit fernbedienbaren Konfiguratoren zugeordnet werden, d.h. in diesem Falle ist die Zuordnung von Steuerelementen zu Funktionen und Menüstrukturen auch über Gerätegrenzen hinweg möglich.

7. Verfahren nach mindestens einem der vorgehenden Ansprüche
• **dadurch gekennzeichnet, dass**
(a) das Verfahren über eine Authentifizierungs- und Autorisierungsfunktion verfügt, die wiederum
i. eine im Speicher des audiovisuellen Kommunikationsgerät abgelegte Liste von Personen mit Anmeldekennung, Passwort und eine Zuordnung zu den Funktionen, für die die betreffende Person autorisiert ist beinhaltet,
ii. eine Funktion zur Pflege, d.h. Eintragung, Löschung und Änderung von Einträgen in genannter Liste beinhaltet,
iii. einen Zugriff auf Funktionen nur den hierfür gemäß der genannten Liste autorisierte Personen nach deren erfolgter Authentifizierung bzw. Anmeldung an dem durch das genannte Verfahren gesteuerten Gerät bereitstellt,
(b) bei Funktionen eines durch das genannte Verfahren gesteuerten ersten Gerätes, die von einem hierzu gemäß Anspruch 4 berechtigten, durch das genannte Verfahren gesteuertes zweite Gerät fern bedient werden,
i. der Zugriff auf die genannten fern bedienten Funktionen am zweiten Gerät, nur den hierfür gemäß der genannten Liste des ersten Gerätes autorisierte Personen nach deren erfolgter Authentifizierung bzw. Anmeldung am zweiten Gerät bereitgestellt wird,
(c) bei Funktionen eines durch das genannte Verfahren gesteuerten ersten Gerätes, die von einem hierzu gemäß Anspruch 4 berechtigten, durch das genannte Verfahren gesteuertes zweites Gerät fern bedient werden, die wiederum von einem hierzu vom zweiten Gerät gemäß Anspruch 4 berechtigten, durch das genannte Verfahren gesteuertes drittes Gerät fern bedient werden,
i. der Zugriff auf die genannten fern bedienten Funktionen des ersten Gerätes am dritten Gerät, nur den hierfür gemäß der genannten Liste des zweiten Gerätes autorisierte Personen nach deren erfolgter Authentifizierung bzw. Anmeldung am dritten Gerät bereitstellt wird.
ii. die Autorisierung von Personen für die Fernsteuerung am dritten Gerät durch Eintragung in der genannten Liste des zweiten Gerätes nur von Personen, die gemäß der genannten Liste des ersten Gerätes für diese Funktion am zweiten Gerät autorisiert sind, erfolgen darf.

8. Verfahren nach mindestens einem der vorhergehenden Ansprüche
• **dadurch gekennzeichnet, dass** mindestens eines der folgenden Merkmale erfüllt wird, d.h. dass
(a) die gemäß Anspruch 7 vorhandene Authentifizierungs- und Autorisierungsfunktion über ein 4-Augen Prinzip verfügt, d.h.
i. für den Zugriff auf eine Funktion zwei Personen, die einer für den Zugriff auf die Funktion autorisierten Rolle zugewiesen sind erforderlich sind, indem
ii. die erste Person den Zugriff durchführt, er jedoch nicht sofort ausgeführt wird,
iii. sondern erst, nachdem die zweite Person von dem genannten Verfahren über den Zugriff informiert wurde und
iv. die zweite Person den Zugriff bestätigt,
(b) das in Anspruch 1 genannte Kommunikationssystem im Hintergrund läuft, also ein direkter Zugriff auf Funktionen des genannten Kommunikationssystem im laufenden Betrieb nicht möglich ist,
(c) das genannte Verfahren beim Starten des Computersystems die einzige im Vordergrund laufende Anwendung ist,
(d) das Verlassen oder der Abbruch des genannten Verfahrens und ein Wechsel in die Betriebsumgebung (Shell) des Computersystems nicht möglich ist.

9. Verfahren nach mindestens einem der vorhergehenden Ansprüche
• **dadurch gekennzeichnet, dass** mindestens eine der folgenden Funktionalitäten in mindestens einem Bedienungsmodus verfügbar gemacht werden kann:
(a) ein automatischer Verbindungsaufbau, d.h. dass beim Einschalten des Gerätes, ggf. aus einem Standby Zustand, ohne weiteren Benutzereingriff eine Verbindung mit einem Ziel aufgebaut wird,
(b) eine Verbindungssuchlauf, d.h. dass bei Aktivierung des Verbindungssuchlaufes solange Versuche unternommen werden eine Verbindung mit einem von verschiedenen Zielen aufzubauen, bis der Verbindungsaufbau erfolgreich ist oder ein anderes, festgelegtes Abbruchkriterium erfüllt ist,
(c) eine symmetrische Kommunikation, d.h. das ausgehende Videosignal wird gesendet, wenn ein eingehendes Videosignal empfangen wird und das ausgehende Audiosignal wird gesendet, wenn ein eingehendes Audiosignal empfangen wird,
(d) eine Direktwahlfunktion, d.h. das ein voreingestelltes Ziel durch eine einfache Benutzeraktion direkt angewählt werden kann,
(e) eine Kamerafernsteuerung, d.h. dass
i. die vorhandene Kommunikationsumgebung neben den Audio- und Video-Kanälen einen zusätzlichen Datenkanal bereitstellt,
ii. der verbundene Teilnehmer über eine Kamera mit Fernsteuerungsfunktion verfügt,
iii. die genannte Fernsteuerungsfunktion von dem Steuerungsverfahren über den Datenkanal angesprochen werden kann,
iv. die genannte Fernsteuerungsfunktion über die von dem Steuerungsverfahren bereitgestellte Bedieneinheit durch den Anwender gesteuert werden kann,
v. die bereitgestellte Bedieneinheit für die Fernsteuerung der Kamera über ein Kalibrierungsverfahren so eingestellt werden kann, dass die maximal gewünschten Ausrichtungen der Kamera bestimmten gewünschten Einstellungen der Steuerelemente zugewiesen werden, so dass die Kamera nur innerhalb der gewünschten Grenzen bewegt werden kann.
(f) ein Rufzeichen, d.h. dass bei bereits bestehender Verbindung und stattfindender Kommunikation bei dem anderen Teilnehmer ein akustisches oder optisches oder sonstiges Signal ausgelöst werden kann,
(g) eine Signalgeberprüfung, d.h. dass
i. das Steuersystem die etwaige Verfügbarkeit eines Signalgebers und dessen Funktionsbereitschaft feststellt und signalisiert,
ii. das Steuersystem ggf. die Verfügbarkeit und Funktionsbereitschaft des Signalgebers über einen verfügbaren Datenkanal der Kommunikationsumgebung einem verbundenen Teilnehmer signalisiert,
iii. das Steuersystem ggf. die von einem verbundenen Teilnehmer über einen verfügbaren Datenkanal gesendete Information über die Verfügbarkeit und Funktionsbereitschaft eines Signalgebers erkennt und dem Anwender signalisiert,
(h) ein Meldezeichens, d.h. dass
i. in periodischen Zeitabständen durch ein akustisches, optisches oder sonstiges Signal vom Anwender ein Quittierungssignal abgefragt wird,
ii. bei Ausbleiben der Quittierung, bei bestehender Verbindung ein Rufzeichen ausgelöst wird.
(i) eine Präsenzinfo, d.h. dass bei bestehender Verbindung dem verbundenen Teilnehmer einer von mehreren Informationstexten angezeigt wird,
(j) eine Protokollierung, d.h. dass
i. eine Datei erzeugt wird, in die verbindungs-, nutzungs- oder abrechnungsrelevante Informationen des Gerätes abgespeichert werden,
ii. die genannte Datei lesbar oder druckbar ist,
(k) ein Begrüßungsvideo, d.h. dass nach Aufbau der Verbindung ein Begrüßungsvideo ggf. selektiert und abgespielt wird,
(l) eine Aufzeichnungsfunktion, d.h. dass
i. ein Mitschnitt der Verbindung aufgezeichnet wird,
ii. dem anderen Teilnehmer der Mitschnitt signalisiert wird,
iii. eine Wiedergabe des Mitschnitts sowohl die eingehenden als auch ausgehenden Audio- und Videokanäle umfasst,
(m) eine Mehrfachverbindung, d.h.,
i. dass mehrere Verbindungen gleichzeitig aufrecht erhalten werden,
ii. dass bei einer bestehenden Verbindung der Verbindungsversuch eines zweiten Teilnehmers signalisiert wird (anklopfen),
(n) eine Verbindungsweiterleitung, d.h., dass eine Verbindung an einen anderen Teilnehmer weitergeleitet wird,
(o) eine Videobotschaftsfunktion, so dass
i. bei nicht bestehender Verbindung eine Videobotschaft auf einem durch das Verfahren gesteuertes System aufgezeichnet und ggf. editiert werden kann,
ii. die Videobotschaft durch Aufbau einer Verbindung mit einem anderen durch das genannte Verfahren gesteuertes Gerät an dieses Gerät gesendet werden kann,
iii. eine empfangene Videobotschaft abgespielt werden kann,
iv. während der Abspielung einer Videobotschaft, der Videobotschaft ggf. durch Verwendung des zweiten Audio- und Videokanals eine Antwortbotschaft hinzugefügt werden kann,
v. die Videobotschaft mit 2 Audio und Videokanälen editiert und an ein anderes Gerät gesendet werden kann.
(p) eine Vitalfunktion, d.h.
i. ein bestimmter Satz von Funktionen eines durch das genannte Verfahren gesteuerte Gerät als "Vitalfunktionen" gekennzeichnet werden können,
ii. das genannte Verfahren überprüft, ob für alle als "Vitalfunktion" gekennzeichneten Funktionen mindestens eine für den Zugriff auf diese Funktionen autorisierte Person an dem Gerät oder einem, die Funktion fernsteuernden zweiten Gerät angemeldet ist, und
iii. falls für eine als "Vitalfunktion" gekennzeichnete Funktion keine der genannten Personen angemeldet ist, das genannte Gerät ein Alarmsignal erteilt, und
iv. es bei bestehender Verbindung ein Rufzeichen auslöst.
(q) eine Abrechnungsfunktion, d.h.
i. durch das genannte Steuerungsverfahren erfolgt eine Protokollierung und Bereitstellung von abrechnungsrelevanten Informationen über die von dem Verfahren bereitgestellten Funktionen

10. Installationsverfahren zur Installation eines bidirektionalen audiovisuellen Kommunikationsgerätes gemäß mindestens einer der vorhergehenden Ansprüche,
• **dadurch gekennzeichnet dass**,
(a) das in Anspruch 1 genannte, dem Zweck dieser Erfindung entsprechend konfigurierte Kommunikationssystem in einen Speicherbereich der genannten Hardwarekonfiguration kopiert wird,
(b) das in Anspruch 1 genannte Steuerungsverfahren in einen Speicherbereich der genannten Hardwarekonfiguration kopiert wird,
(c) die in Anspruch 1 genannten, etwaigen weiteren ggf. multimedialen Anwendungssysteme in einen Speicherbereich der genannten Hardwarekonfiguration kopiert werden,

11. Installationsverfahren gemäß vorhergehendem Anspruch,
• **dadurch gekennzeichnet, dass**
(a) das in Anspruch 1 genannte Verfahren auf einem handelsüblichen, dem Stand der Technik entsprechenden Computersystem installiert wird,
(b) das auf dem genannten Computersystem ein neuer Benutzer (User) registriert wird,
(c) die Konfigurationseinstellungen des genannten Computersystems für den genannten neuen Benutzers so gestaltet werden, dass beim Anmelden am genannten Computersystem als der genannte Benutzer,
i. das das in vorhergehendem Anspruch genannte Steuerungsverfahren die einzige im Vordergrund laufende Anwendung ist,

12. Installationsverfahren gemäß mindestens einem der vorhergehenden Ansprüche,
• **dadurch gekennzeichnet, dass**
(a) das in Anspruch 1 genannte, dem Zweck dieser Erfindung entsprechend konfigurierte Computersystem in einen Speicherbereich der genannten Hardwarekonfiguration kopiert wird,
(b) das Computersystem so eingerichtet wird, dass das in Anspruch 1 genannte Verfahren beim Starten des Gerätes die einzige im Vordergrund laufende Anwendung ist,

13. Installationsverfahren gemäß mindestens einem der vorhergehenden Ansprüche,
• **dadurch gekennzeichnet, dass**
(a) die Konfigurationseinstellungen der in Anspruch 10 und ggf. in Anspruch 12 genannten in den genannten Speicherbereich kopierten Komponenten, die von dem jeweils verwendeten Kommunikationsnetzwerk und des jeweiligen Benutzers abhängig sind, dem Zweck dieser Erfindung entsprechend mit Standardwerten versehen sind, so dass für ein vorgegebenes Kommunikationsnetzwerk keine weiteren Anpassungen der genannten Einstellungen erforderlich sind, um eine, dem Zweck dieser Erfindung entsprechende Funktionsweise des Gerätes zu ermöglichen.

14. Computerprogramm, das direkt in den Speicher eines Computers geladen werden kann und Computerprogrammprodukt, das auf einem computergeeigneten Medium gespeichert ist gemäß dem nach mindestens einem der Ansprüche 1 bis 9 und 10 bis 13 beanspruchen Steuerungs- bzw. Installationsverfahren.

15. Verfahren zur elektronischen Verteilung des in den Anspruch 14 genannten Computerprogramms über ein beliebiges Kommunikations- oder Computernetzwerk.

16. Verfahren nach mindestens einem der Ansprüche 1 bis 9
• **dadurch gekennzeichnet, dass**
(a) die Bedieneinheit Sensoren für die räumliche Stellung des Bildschirms in mindestens einer Dimension aufweist
(b) die Signale der Sensoren für die Fernsteuerung der Kamera eines zweiten durch das Verfahren gesteuerten, mit einer fernsteuerbaren Kamera ausgestatteten Gerätes verwendet werden
(c) die Steuerung der Kamera derart erfolgt, dass die Position des Bildschirms des ersten Gerätes unmittelbar mindestens einen der Parameter Betrachtungswinkel oder Bildausschnitt inkl. Zoom der Kamera des zweiten Gerätes verändert.

17. Anordnung von Bildschirm und mindestens eines Sensors für die Bestimmung von Position oder Bewegung des Bildschirms eines mit einem Verfahren nach mindestens einem der Ansprüche 1 bis 9 und 16 gesteuerten Videokommunikationsgerätes
• **dadurch gekennzeichnet, dass**
(a) die durch die Anordnung bestimmte Position oder Bewegung des Bildschirms zur Fernsteuerung einer Kamera verwendet wird.

18. Verwendung des in gemäß Ansprüche 1 bis 9 und 16 genannten Steuerungsverfahren für die Unterstützung einer Person durch mindestens eine andere Person,
• **dadurch gekennzeichnet, dass**
(a) über die audiovisuelle Kommunikationsverbindung die unterstützte Person mit mindestens einer unterstützenden Person kommuniziert,
(b) über das Steuerungsverfahren technische Einrichtungen am Ort der unterstützten Person von mindestens einer unterstützenden Person ferngesteuert werden.
